# EUROPEAN PATENT APPLICATION

(11) **EP 1 500 679 A1**
(43) Date of publication of application: **26.01.2005**
(21) Application number: 04720991.1
(22) Date of filing: 16.03.2004
(51) Int. Cl.: C08L 9/00, C08J 3/21, C08K 3/22

(54) **DIENE RUBBER/INORGANIC COMPOUND COMPOSITE AND PROCESS FOR PRODUCING THE SAME**

(30) Priority: 20.03.2003 JP 2003078754; 20.03.2003 JP 2003078755
(71) Applicant: JSR Corporation, Tokyo 104-8410 (JP)
(72) Inventor: UDAGAWA, Yoshiyuki, Chuo-ku, Tokyo 104-8410 (JP); TOYOSHIMA, Tsukasa, Chuo-ku, Tokyo 104-8410 (JP); TADAKI, Toshihiro, Chuo-ku, Tokyo 104-8410 (JP)
(74) Representative: Leson, Thomas Johannes Alois, Dipl.-Ing.
(86) International application number: PCT/JP2004/003499
(87) International publication number: WO 2004/083298

(57) **Abstract**

An objective of the present invention is to provide a production process capable of improving an operation efficiency of a diene-based rubber-inorganic compound composite during production by forming a composite having high dispersibility of an inorganic compound in a diene-based rubber and having relatively large crumb diameter upon coagulation. The present invention provides a process for producing a composite comprising a diene-based rubber and an inorganic compound represented by the general formula: wM · xSiO_{y} · zH₂O (where M is at least one metal element selected from the group consisting of Al, Mg, Ti and Ca, metal oxide thereof or metal hydroxide thereof, and w, x, y, and z are an integer of from 1 to 5, an integer of from 0 to 10, an integer of from 2 to 5, and an integer of from 0 to 10, respectively.), and comprises a step of mixing the inorganic compound and/or a material capable of forming the inorganic compound, an anionic compound and a dispersion liquid of the diene-based rubber.

## Description

### TECHNICAL FIELD

The present invention relates to a diene-based rubber-inorganic compound composite and a production process therefor. More particularly, it relates to a production process capable of improving an operation efficiency of a diene-based rubber-inorganic compound composite during production by forming a composite having high dispersibility of an inorganic compound in a diene-based rubber and having relatively large crumb diameter upon coagulation. In addition, the present invention relates to a diene-based rubber-inorganic compound composite in which aluminium hydroxide is dispersed at high content and homogeneously, as well as a production process therefor.

The diene-based rubber-inorganic compound composite produced by the present invention is utilized as a raw material for a rubber for a tire such as a tire tread, as well as various kinds of rubber products such as a belt, a rubber roll and a hose, and has excellent wearing resistance.

### BACKGROUND ART

An inorganic filler such as silica has been often used in combination with carbon black and the like as a reinforcing agent constituting a rubber composition for a tire and the like. Such reinforcing agent is dry-kneaded together with a rubber component, and a rubber product such as a tire is manufactured by using the resultant rubber composition.

In recent years, a method of producing a diene-based rubber-inorganic compound composite where an inorganic compound is dispersed homogeneously in the diene-based rubber has been disclosed (refer to JP-A-2002-241507). This method involves a problem that the crumb diameter of the obtained composite is as small as 500 µm or less and problems being laborious for handing and poor in the operation efficiency during production steps for obtaining the diene-based rubber-inorganic compound composite.

Further, a tire tread obtained by using a reinforcing agent where an inorganic filler such as silica is combined with carbon black and the like shows low rolling resistance and excellent in operation stability typically represented by wet skid resistance. However, it involves problems of being poor in wearing resistance and tensile strength of the vulcanized rubber.

In recent years, a rubber composition obtained by adding only an aluminium hydroxide powder instead of the reinforcing agent described above and dry-kneading has been known (refer to the prior art for JP-A-2000-204197).

In addition, a rubber composition using silica and/or carbon black and aluminium hydroxide together (refer to JP-A-2000-204197 and JP-A-2000-302914), a rubber composition using silica, aluminium hydroxide, magnesium hydroxide and the like (refer to JP-A-11-181155) and the like are also disclosed. These rubber compositions are also prepared by dry-kneading each of predetermined raw starting powders and involve problems that the dispersion of aluminium hydroxide and the like is not enough and the resultant rubber products don't show sufficiency in wearing resistance and tensile strength.

Further, the method disclosed in JP-A-2002-241507 leads to a low formation yield of aluminium hydroxide and wearing resistance is improved slightly.

Additionally, WO 02/20655Al discloses a process for producing a diene-based-inorganic compound composite comprising mixing step of an aqueous dispersion containing a diene-based rubber and an aqueous dispersion of an inorganic compound. It is described that pH for the aqueous dispersion of the inorganic compound is preferably in the range between 8.5 and 11 or between 2 and 4.

However, in a case where the inorganic compound constituting the composite is aluminium hydroxide, when coagulation is conducted, for example, at pH in the range between 2 and 4 under a strong acidic condition which is a usual coagulation condition for synthetic rubber, a diene-based rubber is light and suspends in the upper portion of an aqueous solution, whereas an inorganic compound containing aluminium hydroxide is heavy and is precipitated by mixing of an aqueous dispersion of the diene-based rubber and an aqueous dispersion of the inorganic compound making it difficult for co-coagulation of rubber in which aluminium hydroxide is dispersed. In addition, when it is intended to co-coagulate them effectively, it results in a problem of requiring much time for stirring, which is not efficiently.

Further, in a case wherein co-coagulation is conducted under a strong acidic condition, a large quantity of sulfuric acid has to be used for rendering the system acidic when sulfuric acid is used. And aluminium sulfate and the like as by-products are precipitated in addition to the aimed aluminium hydroxide and they are intaken to the diene-based rubber to lower the content of aimed aluminium hydroxide relatively.

On the other hand, under an alkaline condition, a diene-based rubber is hard to coagulate, it is difficult to obtain a diene-based rubber-aluminium hydroxide composite efficiently.

It was considered that in a case of using aluminium hydroxide solution, since a portion of aluminium hydroxide is precipitated within a weakly acidic to weakly alkaline pH region to form a suspended state (state of slurry), coagulation within the pH region described above is not preferred.

### DISCLOSURE OF THE INVENTION

The present invention is intended to solve the problems described above and an objective is to provide a production process capable of improving an operation efficiency of a diene-based rubber-inorganic compound composite during production by forming a composite having high dispersibility of an inorganic compound in a diene-based rubber and having relatively large crumb diameter upon coagulation, as well as a diene-based rubber-inorganic compound composite providing a rubber product outstandingly excellent in wearing resistance and a production process therefor.

In addition, another objective of the present invention is to provide a diene-based rubber-inorganic compound composite having outstandingly excellent wearing resistance in which aluminium hydroxide is dispersed at high content and homogeneously, as well as a production process capable of producing the composite efficiently in a short time. It is noted that "Aluminium hydroxide" in the present invention includes Al(OH)₃, Al(OH)₄⁻ and Al₂O₃ · nH₂O (n is an integer of 0 to 4) and is converted as Al(OH)₃.

The present invention is described as follows.
1. A process for producing a diene-based rubber-inorganic compound composite comprising a diene-based rubber and an inorganic compound represented by the following general formula (I), comprising
   a step of mixing an inorganic compound and/or a material capable of forming the inorganic compound, an anionic compound and a dispersion liquid of a diene-based rubber:

   wM · xSiO_{y} · zH₂0 (I)

   wherein M is at least one metal element selected from the group consisting of Al, Mg, Ti and Ca, metal oxide thereof or metal hydroxide thereof, and w, x, y, and z are an integer of from 1 to 5, an integer of from 0 to 10, an integer of from 2 to 5, and an integer of from 0 to 10, respectively.
2. The process for producing a diene-based rubber-inorganic compound composite according to 1 above, wherein the material capable forming the inorganic compound is at least one material selected from the group consisting of metal salts, oxoacid salts of metals and organic metal compounds.
3. The process for producing a diene-based rubber-inorganic compound composite according to 1 above, wherein the anionic compound is a compound having a carboxyl group.
4. The process for producing a diene-based rubber-inorganic compound composite according to 3 above, wherein the compound having a carboxyl group is at least one compound selected from the group consisting of a rosinate and a salt of a fatty acid.
5. The process for producing a diene-based rubber-inorganic compound composite according to 1 above, wherein the dispersion liquid of the diene-based rubber is a diene-based rubber latex synthesized by emulsion polymerization.
6. The process for producing a diene-based rubber-inorganic compound composite according to 1 above, comprising a step of co-coagulating the diene-based rubber and the inorganic compound from the liquid mixture obtained in the mixing step by using an electrolyte comprising a metal salt, a step of separating a coagulation product by filtration, and a step of drying the coagulation product.
7. The process for producing a diene-based rubber-inorganic compound composite according to 1 above, wherein the diene-based rubber is a diene-based rubber having a polar group.
8. The process for producing a diene-based rubber-inorganic compound composite according to 7 above, wherein the polar group is at least one kind of group selected from the group consisting of hydroxyl group, oxy group, alkoxysilyl group, epoxy group, carboxyl group, carbonyl group, oxycarbonyl group, sulfide group, disulfide group, sulfonyl group, sulfinyl group, thiocarbonyl group, imino group, amino group, nitrile group, ammonium group, imide group, amide group, hydrazo group, azo group and diazo group.
9. The process for producing a diene-based rubber-inorganic compound composite according to 1 above, wherein the inorganic compound represented by the general formula (I) is an inorganic compound represented by the following general formula (II):

   Al₂O₃ · mSiO₂ · nH₂O (II)

   wherein m is an integer from 0 to 4 and n is an integer from 0 to 4.
10. The process for producing a diene-based rubber-inorganic compound composite according to 2 above, wherein the metal constituting the metal salt, the oxo acid salt of metal and the organic metal compound is aluminium.
11. The process for producing a diene-based rubber-inorganic compound composite according to 1 above, further comprising a step of mixing a dispersion liquid of a diene-based rubber to the liquid mixture obtained in the mixing step.
12. A diene-based rubber-inorganic compound composite which is obtained by the process according to 1 above.
13. A process for producing a diene-based rubber-inorganic compound composite comprising a diene-based rubber and aluminium hydroxide, comprising: a step of preparing an aluminium-containing suspension whose pH is controlled in a range between 5.1 and 8.4, and a step of mixing the aluminium-containing suspension and a dispersion liquid of a diene-based rubber to co-coagulate the diene-based rubber and aluminium hydroxide, successively.
14. The process for producing a diene-based rubber-inorganic compound composite according to 13 above, comprising a step of adding at least one kind selected from the group consisting an acid and a coagulation accelerator to the co-coagulated liquid mixture to complete the co-coagulation.
15. The process for producing a diene-based rubber-inorganic compound composite according to 13 above, wherein the aluminium-containing suspension is prepared by using an aluminium salt containing an aluminate.
16. The process for producing a diene-based rubber-inorganic compound composite according to 13 above, wherein the dispersion liquid of the diene-based rubber is a diene-based rubber latex by emulsion polymerization.
17. The process for producing a diene-based rubber-inorganic compound composite according to 13 above, further comprising a step of separating a coagulation product by filtration and a step of drying the coagulation product.
18. The process for producing a diene-based rubber-inorganic compound composite according to 13 above, wherein the diene-based rubber is a diene-based rubber having a polar group.
19. The process for producing a diene-based rubber-inorganic compound composite according to 18 above, wherein the polar group is at least one kind of group selected from the group consisting of hydroxyl group, oxy group, alkoxysilyl group, epoxy group, carboxyl group, carbonyl group, oxycarbonyl group, sulfide group, disulfide group, sulfonyl group, sulfinyl group, thiocarbonyl group, imino group, amino group, nitrile group, ammonium group, imide group, amide group, hydrazo group, azo group and diazo group.
20. A diene-based rubber-inorganic compound composite which is obtained by the process according to 13 above.

### DETAILED DESCRIPTION OF THE INVENTION

The present invention is described in detail.

A first process for producing a diene-based rubber-inorganic compound composite according to the present invention is a process for producing a composite comprising a diene-based rubber and an inorganic compound represented by the following general formula (I) and is characterized by comprising a step of mixing an inorganic compound and/or a material capable of forming the inorganic compound, an anionic compound and a dispersion liquid of a diene-based rubber.

wM · xSiO_{y} · zH₂O (I)

(where M is at least one metal element selected from the group consisting of Al, Mg, Ti and Ca, metal oxide thereof or metal hydroxide thereof, and w, x, y, and z are an integer of from 1 to 5, an integer of from 0 to 10, an integer of from 2 to 5, and an integer of from 0 to 10, respectively.)

The "Diene-based rubber" according to the present invention is not particularly restricted providing it comprises a conjugated diene-based monomer unit as a monomer unit constituting a rubber, such as a (co)polymer comprised of a conjugated diene-based monomer and a copolymer comprised of a conjugated diene-based monomer and a monomer selected from the group consisting of a vinylic aromatic monomer and an olefinic unsaturated nitrile monomer. Specifically, the diene-based rubber includes, for example, natural rubber, butadiene rubber, isoprene rubber, styrene-butadiene rubber, butadiene-isoprene rubber, butadiene-styrene-isoprene rubber, acrylonitrile-butadiene rubber, acrylonitrile-styrene-butadiene rubber, chloroprene rubber and the like. These may be used alone or in combination of two or more.

The diene-based rubber used in the present invention is preferably a diene-based rubber obtained by emulsion polymerization including, for example, a butadiene rubber by emulsion polymerization, a styrene-butadiene rubber by emulsion polymerization, an acrylonitrile-butadiene rubber by emulsion polymerization, an acrylonitrile-butadiene rubber by emulsion polymerization and the like.

The diene-based rubber may be an oil-extended rubber where oil was added to the rubber or it may be a non-oil-extended rubber. Further, an oil-extended rubber and a non-oil-extended rubber may be used in combination.

The "dispersion liquid of diene-based rubber" used in the production process of the present invention is a dispersion in which the diene-based rubber exemplified above preferably is dispersed in an aqueous medium with no particular restriction. Further, this is applicable also for a dispersion method of the exemplified diene-based rubber. A dispersing medium is usually water, but it may be an aqueous medium where alcohol is dissolved in water. As the dispersion liquid, a diene-based rubber latex obtained by emulsion polymerization is preferred and includes natural rubber latex, an emulsion obtained by re-emulsification of a diene-based synthetic rubber, a diene-based rubber emulsion formed by polymerization in an aqueous medium, a dispersion liquid of a diene-based synthetic rubber and the like. These may be used each alone or two or more of them may be used in combination irrespective of the kind of the diene rubber and the kind of the liquid dispersant.

The conjugated diene-based monomer (hereinafter also referred to as "conjugated diene") includes, for example, 1,3-butadiene, 2,3-dimethyl-1,3-butadiene, 2-chloro-1,3-butadiene, 1,3-pentadiene, isoprene and the like. Among these, 1,3-butadiene, isoprene and the like are preferred and 1,3-butadiene is more preferred. Further, the conjugated dienes may be used alone or in combination of two or more.

The vinylic aromatic monomer includes, for example, styrene, α-methylstyrene, 2-methylstyrene, 3-methylstyrene, 4-methylstyrene, 2,4-diisopropyl styrene, 2,4-dimethyl styrene, 4-tert-butyl styrene, 5-tert-butyl-2-methylstyrene, monochlorostyrene, dichlorostyrene, monofluorostyrene and the like. Among these, styrene is preferred. Further, the vinylic aromatic monomers may be used alone or in combination of two or more.

The olefinic unsaturated nitrile monomer includes, for example, (meth)acrylonitrile, vinylidene cyanate and the like. These monomers may be used alone or in combination of two or more.

As a diene-based rubber used in the production process of the present invention, not only the diene-based rubber comprising a monomer unit formed from the monomers described above but also a diene-based rubber having a polar group can also be used. In a case of using this diene-based rubber having the polar group, both a dispersibility of the inorganic compound contained in the resultant composite and a reinforcing property of the resultant rubber products are improved.

As the polar group, a functional group having element including in the second period to fourth period and belonging to the groups 5B or 6B of the periodic table, specifically, a functional group having element such as nitrogen, oxygen, sulfur and phosphorus, and, among all, a functional group having element such as nitrogen and oxygen are preferred. Such a polar group includes, for example, a hydroxyl group, an oxy group, an alkoxysilyl group, an epoxy group, a carboxyl group, a carbonyl group, an oxycarbonyl group, a sulfide group, a disulfide group, a sulfonyl group, a sulfinyl group, a thiocarbonyl group, an imino group, an amino group, a nitrile group, an ammonium group, an imide group, an amide group, a hydrazo group, an azo group, a diazo group, an oxygen-containing heterocyclic group, a nitrogen-containing heterocyclic group, a sulfur-containing heterocyclic group and the like. The diene-based rubber may have one polar group or have two or more polar groups. Further, among these groups, a hydroxyl group, an alkoxysilyl group, an epoxy group, a carboxyl group, a sulfide group, a sulfonyl group, an amino group, a nitrile group, a nitrogen-containing heterocyclic group and the like are preferred, a hydroxyl group, an alkoxysilyl group, a carboxyl group, an amino group, a nitrile group, a nitrogen-containing heterocyclic group and the like are further preferred, and particularly, a hydroxyl group and an amino group are most preferred.

A diene-based rubber having the polar group described above can be usually obtained by polymerizing a monomer such as a conjugated diene and a vinylic monomer having the polar group described above.

The vinylic monomer having the polar group is not particularly restricted providing it is a polymerizable monomer having at least one polar group described above in the molecule. That is, it may have two or more polar groups in one molecule. In addition, it may have one or more different polar groups in one molecule.

The vinylic monomer having the polar group includes, for example, a vinylic monomer having a hydroxyl group, a vinylic monomer having an alkoxysilyl group, a vinylic monomer having an epoxy group, a vinyl monomer having a carboxyl group, a vinylic monomer having an amino group, a vinylic monomer having a nitrile group and the like. These vinylic monomers may be used alone or in combination of two or more.

As the vinylic monomer having a hydroxyl group, a polymerizable monomer having at least one primary, secondary or tertiary hydroxyl group in one molecule can be used. Such vinylic monomer having a hydroxyl group includes, for example, an unsaturated carboxylic acid-based monomer having a hydroxyl group, a vinylic aromatic monomer having a hydroxyl group, a vinyl ether-based monomer having a hydroxyl group, a vinyl ketone-based monomer having a hydroxyl group, (meth)allyl alcohol and the like. These may be used alone or in combination of two or more. Further, among these, the unsaturated carboxylic acid-based monomer having a hydroxyl group and the vinylic aromatic monomer having a hydroxyl group are preferred.

The unsaturated carboxylic acid-based monomer having a hydroxyl group includes a derivative of an ester, an amide, an anhydride and the like of acrylic acid, methacrylic acid, itaconic acid, fumaric acid, maleic acid and the like. Among these, ester derivatives of acrylic acid, methacrylic acid and the like are preferred.

The unsaturated carboxylic acid-based monomer having a hydroxyl group includes, for example, a hydroxyalkyl (meth)acrylate such as 2-hydroxyethyl (meth)acrylate, 2-hydroxylpropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; a mono(meth)acrylate of a polyalkylene glycol such as polyethylene glycol and polypropylene glycol (where the number of alkylene glycol unit is, for example, 2 to 23); an unsaturated amide having a hydroxyl group such as N-hydroxymethyl (meth)acrylamide, N-(2-hydroxyethyl) (meth)acrylamide and N,N-bis(2-hydroxyethyl) (meth)acrylamide; and the like. Among these, hydroxyalkyl (meth)acrylate is preferred.

In addition, the vinylic aromatic monomer having a hydroxyl group includes, for example, o-hydroxystyrene, m-hydroxystyrene, p-hydroxystyrene, o-hydroxy-α-methylstyrene, m-hydroxy-α-methylstyrene, p-hydroxy-α-methylstyrene, p-vinylbenzyl alcohol and the like.

The vinylic monomer having an alkoxysilyl group includes, for example, (meth)acryloxymethyltrimethoxy silane, (meth)acryloxymethylmethyldimethoxy silane, (meth)acryloxymethyldimethylmethoxy silane, (meth)acryloxymethyltriethoxy silane, (meth)acryloxymethylmethyldiethoxy silane, (meth)acryloxymethyldimethylethoxy silane, (meth)acryloxymethyltripropoxy silane, (meth)acryloxymethylmethyldipropoxy silane, (meth)acryloxymethyldimethylpropoxy silane, γ-(meth)acryloxypropyltrimethoxy silane, γ-(meth)acryloxypropylmethyldimethoxy silane, γ-(meth)acryloxypropyldimethyl methoxysilane, γ-(meth)acryloxypropyltriethoxy silane, γ-(meth)acryloxypropylmethyldiethoxy silane, γ-(meth)acryloxypropyldimethylethoxy silane, γ-(meth)acryloxypropyl tripropoxy silane, γ-(meth)acryloxypropylmethyl dipropoxy silane, γ-(meth)acryloxypropyl dimethyl propoxy silane, γ-(meth)acryloxypropylmethyl diphenoxy silane, γ-(meth)acryloxypropyl dimethylphenoxy silane, γ-(meth)acryloxypropylmethyl dibesiloxy silane, γ-(meth)acryloxypropyldimethyl besiloxy silane; trimethoxy vinyl silane, triethoxyvinyl silane, 6-trimethoxysilyl-1,2-hexene and p-trimethoxysilyl styrene disclosed, for example, in JP-A-7-188356; and the like. These vinylic monomers having an alkoxysilyl group may be used alone or in combination of two or more.

The vinylic monomer having an epoxy group includes, for example, (meth)allyl glycidyl ether, glycidyl (meth)acrylate, 3,4-oxycyclohexyl (meth)acrylate and the like. These vinylic monomers having an epoxy group may be used alone or in combination of two or more.

The vinylic monomer having a carboxyl group includes, for example, an ester having a carboxyl group such as a monoester of an unsaturated carboxylic acid such as (meth)acrylic acid, maleic acid, fumaric acid, itaconic acid, tetraconic acid and sinnamic acid; or non-polymerizable polybasic carboxylic acids such as phthalic acid, succinic acid and adipic acid, and an unsaturated compound having a hydroxyl group such as (meth)allyl alcohol and 2-hydroxyethyl (meth)acrylate, as well as salts thereof. Among these, the unsaturated carboxylic acid is preferred. These vinylic monomers having a carboxyl group may be used alone or as a combination of two or more.

The vinylic monomer having an amino group may be used a polymerizable monomer having at least one amino group selected from primary, secondary and tertiary amino group in one molecule. Among these, a vinylic monomer having a tertiary amino group (such as a dialkylaminoalkyl (meth)acrylate and a vinylic aromatic compound having a tertiary amino group) are particularly preferred. Further, the vinylic monomer having an amino group may be used alone or in combination of two or more.

The vinylic monomer having a primary amino group includes, for example, acrylamide, methacrylamide, aminomethyl (meth)acrylate, aminoethyl (meth)acrylate, aminopropyl (meth)acrylate, aminobutyl (meth)acrylate, p-aminostyrene and the like.

The vinyl monomer having a secondary amino group may be used anilinostyrenes, anilinophenyl butadienes, N-mono-substituted (meth)acrylamides and the like.

The anilinostyrenes include, for example, anilinostyrene, β-phenyl-p-anilinostyrene, β-cyano-p-anilinostyrene, β-cyano-β-methyl-p-anilinostyrene, β-chloro-p-anilinostyrene, β-methyl-β-methoxycarbonyl-p-anilinostyrene, β-carboxy-p-anilinostyrene, β-methoxycarbonyl-p-anilinostyrene, β-(2-hydroxyethoxy)carbonyl-p-anilinostyrene, β-formyl-p-anilinostyrene, β-formyl-β-methyl-p-anilinostyrene, α-carboxy-β-carboxy-β-phenyl-p-anilinostyrene and the like.

The anilinophenyl butadienes may be used anilinophenyl butadienes and derivatives thereof and include, for example, 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene, 2-anilinophenyl-3-chloro-1,3-butadiene and the like.

In addition, N-mono-substituted (meth)acrylamides include, for example, N-methyl (meth)acrylamide, N-ethyl (meth)acrylamide, N-methylol acrylamide, N-(4-anilinophenyl) (meth)acrylamide and the like.

The vinylic monomer having a tertiary amino group may be used N,N-di-substituted aminoalkyl acrylates, N,N-di-substituted aminoalkyl acrylamides, a N,N-di-substituted aminoaromatic vinyl compound, a vinyl compound having a pyridyl group and the like.

The N,N-di-substituted amino acrylates include, for example, an ester of acrylic acid or methacrylic acid such as N,N-dimethyl aminomethyl (meth)acrylate, N,N-dimethylaminoethyl (meth)acrylate, N,N-dimethylaminopropyl (meth)acrylate, N,N-dimethylaminobutyl (meth)acrylate, N,N-diethylaminoethyl (meth)acrylate, N,N-diethylaminopropyl (meth)acrylate, N,N-diethylaminobutyl (meth)acrylate, N-methyl-N-ethylaminoethyl (meth)acrylate, N,N-dipropylaminoethyl (meth)acrylate, N,N-dibutylaminoethyl (meth)acrylate, N,N-dibutylaminopropyl (meth)acrylate, N,N-dibutylaminobutyl (meth)acrylate, N,N-dihexylaminoethyl (meth)acrylate, N,N-dioctylaminoethyl (meth)acrylate, acryloylmorpholin and the like. Among these, N,N-dimethylaminoethyl (meth)acrylate, N,N-diethylaminoethyl (meth)acrylate, N,N-dipropylaminoethyl (meth)acrylate, N,N-dioctylaminoethyl (meth)acrylate, N-methyl-N-ethylaminoethyl (meth)acrylate and the like are preferred.

The N-N-di-substituted aminoalkyl acrylamides include, for example, an acrylamide compound or a methacrylamide compound such as N,N-dimethylaminomethyl (meth)acrylamide, N,N-dimethylaminoethyl (meth)acrylamide, N,N-dimethylaminopropyl (meth)acrylamide, N,N-dimethylaminobutyl (meth)acrylamide, N,N-diethylaminoethyl (meth)acrylamide, N,N-diethylaminopropyl (meth)acrylamide, N,N-diethylaminobutyl (meth)acrylamide, N-methyl-N-ethylaminoethyl (meth)acrylamide, N,N-dipropylaminoethyl (meth)acrylamide, N,N-dibutylaminoethyl (meth)acrylamide, N,N-dibutylaminopropyl (meth)acrylamide, N,N-dibutylaminobutyl (meth)acrylamide, N,N-dihexylaminoethyl (meth)acrylamide, N,N-dihexylaminopropyl (meth)acrylamide, N,N-dioctylaminopropyl (meth)acrylamide and the like. Among these, N,N-dimethylaminopropyl (meth)acrylamide, N,N-diethylaminopropyl (meth)acrylamide, N,N-dioctylaminopropyl (meth)acrylamide and the like are preferred.

The N-N-di-substituted aminoaromatic vinyl compounds include, for example, a styrene derivative such as N,N-dimethylaminoethyl styrene, N,N-diethylaminoethyl styrene, N,N-dipropylaminoethyl styrene, N,N-dioctylaminoethyl styrene and the like.

In addition, a nitrogen-containing heterocyclic group may be used in stead of an amino group and the nitrogen-containing heterocyclic group includes, for example, pyrrol, histidine, imidazol, triazolidin, triazole, triazine, pyridine, pyrimidine, pyrazine, indole, quinoline, purine, phenazine, pteridine, melamine and the like. These nitrogen-containing heterocycles may comprise other hetero atoms in the ring.

Among the vinylic monomer having a nitrogen-containing heterocyclic group, the vinyl compound having a pyridyl group includes, for example, 2-vinyl pyridine, 3-vinyl pyridine, 4-vinyl pyridine, 5-methyl-2-vinylpyridine, 5-ethyl-2-vinylpyridine and the like. Among these, 2-vinyl pyridine, 4-vinyl pyridine and the like are preferred. Further, the vinylic monomers having a pyridyl group may be used alone or in combination of two or more.

The vinylic monomer having a nitrile group includes, for example, (meth)acrylonitrile, vinylidene cyanide and the like. These monomers having a nitrile group may be used alone or in combination of two or more.

Contents of the monomer units constituting the diene-based rubber are properly selected in accordance with required characteristics. When the total of the contents of the monomer units is 100% by mass, a content of the conjugated diene-based monomer unit is usually in a range from 40 to 100% by mass, preferably from 50 to 90% by mass and more preferably from 60 to 85% by mass, and a content of the vinylic aromatic monomer unit is usually in a range from 0 to 60% by mass, preferably from 10 to 50% by mass and more preferably from 15 to 40% by mass. Further, in a case of a diene-based rubber having a polar group, a content of the monomer unit formed from the monomer having a polar group is selected properly in accordance with the degree of the monomer having a polar group and is usually from 0.01 to 20% by mass, preferably from 0.05 to 10% by mass. When the content of the monomer unit is less than 0.01% by mass, an interaction with an inorganic compound constituting the composite is sometimes decreased even in a case of using a monomer having a large polarity, thereby failing to obtain a sufficient effect of the present invention. On the other hand, when the content is in excess of 20% by mass, the diene-based rubber having a polar group intensely aggregates with an inorganic compound and tends to make a processing difficult. In a case of using a diene-based rubber having the above contents the monomer units, it is possible to obtain a composite in which the inorganic compound is homogeneously dispersed therein and a rubber composition capable of providing a rubber product of outstandingly excellent wearing resistance.

The polymerization method for the diene-based rubber is not particularly restricted and may be used radical polymerization method, anionic polymerization method and the like. The radial polymerization method includes, for example, bulk polymerization, suspension polymerization, emulsion polymerization and the like. Among these, emulsion polymerization capable of obtaining a stable emulsified dispersion liquid upon completion of polymerization is particularly preferred since the dispersion liquid of diene-based rubber is used in the present invention. For the emulsion polymerization, known method can be applied. A diene-based rubber can be obtained, for example, by emulsifying predetermined monomers in an aqueous medium under the presence of an emulsifier, starting polymerization by a radical polymerization initiator, stopping polymerization by a polymerization terminator after reaching a predetermined polymerization conversion and the like.

The emulsifier may be used an anionic surfactant, a nonionic surfactant, a cationic surfactant, an amphoteric surfactant and the like. These emulsifiers may be used alone or in combination of two or more. In order to obtain a stable emulsified dispersion liquid, an anionic surfactant is usually used. The anionic surfactant including a salt of a long chained fatty acid having a number of carbon atoms of 10 or more, a rosinate and the like is used. Specifically, a potassium salt or a sodium salt of capric acid, lauric acid, myristic acid, palmitic acid, oleic acid, stearic acid and the like are included. In addition, a fluorine-based surfactant can also be used.

The radical polymerization initiator includes, for example, an organic peroxide such as benzoyl peroxide, lauroyl peroxide, tert-butyl hydroperoxide, cumene hydroperoxide, paramenthane hydroperoxide, di-tert-butyl peroxide and dicumyl peroxide. Additionally, a diazocompound such as azobisisobutylonitrile; an inorganic peroxide such as potassium persulfate, a redox type catalyst such as combination of the peroxide described above with ferrous sulfate and the like can also be used. These radical polymerization initiators may be used alone or in combination of two or more.

A chain transfer agent may be used for controlling molecular weight of the diene-based rubber. The chain transfer agent includes, for example, an alkyl mercaptan such as tert-dodecyl mercaptan and n-dodecylmercaptan; carbon tetrachloride; thioglycols; diterpene, terpinolene, γ-terpinenes, α-methylstyrene dimer and the like.

In the polymerization of the diene-based rubber by emulsion polymerization, monomers, an emulsifier, a radical polymerization initiator, a chain transfer agent and the like may be collectively charged entirely to a reaction vessel to start polymerization, or each of the ingredients may be added by being supplied continuously or intermittently during proceeding of the reaction. The diene-based rubber according to the present invention can be polymerized by using a reactor removed with oxygen at a temperature usually in a range from 0 to 100°C, preferably from 0 to 80°C. Operation condition such as temperature and stirring may be changed properly in the course of the reaction. The polymerization method may be continuous or batchwise.

In addition, large polymerization conversion may lead to a gelation and it is preferable that the polymerization conversion is restricted to 80% or less and it is particularly preferred to stop the polymerization in a range from 30 to 70% of the polymerization conversion. The polymerization is stopped by adding a polymerization terminator at the time reaching a predetermined polymerization conversion. The polymerization terminator includes an amine compound such as hydroxyl amine and diethylhydroxyl amine, a quinone compound such as hydroquinone, and the like. After the stopping of polymerization, unreacted monomers are removed from a reaction system as required by a method such as steam distillation to prepare a latex where a diene-based rubber is dispersed.

In the invention, the latex described above may be used as it is, or a latex dispersed as an oil-extended rubber by addition of an extending oil for rubber may also be used for the dispersion liquid of the diene-based rubber. The extending oil for rubber is not particularly restricted and includes, for example, naphthenic, paraffinic, aromatic process oils and the like. The amount of the extending oil for rubber to be used for preparing the oil-extended rubber is preferably from 5 to 100 parts by mass and preferably, from 10 to 60 parts by mass based on 100 parts by mass of the diene-based rubber contained in the latex.

Mooney viscosity [ML₁₊₄(100°C)] of the diene-based rubber or oil-extended rubber contained in the dispersion liquid of the diene-based rubber is preferably in a range from 10 to 200 and more preferably from 30 to 150. In a case where the Mooney viscosity is less than 10, physical properties including wearing resistance are not sufficient and exceeding 200 leads to a poor workability and a difficult kneading.

Next, the "inorganic compound represented by the general formula (I)" according to the present invention is usually in a fine particle form, which is dispersed homogeneously in the diene-based rubber to form a composite combined with the diene-based rubber.

wM · xSiO_{y} · zH₂O (I)

(wherein M is at least one metal element selected from the group consisting of Al, Mg, Ti and Ca, metal oxide thereof or metal hydroxide thereof, and w, x, y, and z are an integer of from 1 to 5, an integer of from 0 to 10, an integer of from 2 to 5, and an integer of from 0 to 10, respectively.)

The inorganic compound described above does not include metal per se.

The inorganic compound includes, for example, alumina (Al₂O₃) such as γ-alumina and α-alumina, alumina monohydrate (Al₂O₃ · H₂O) such as boehmite and diaspore, aluminium hydroxide (Al(OH)₃) such as gibbsite and bayerite, magnesium oxide (MgO), magnesium hydroxide (Mg(OH)₂), calcium oxide (CaO), calcium hydroxide (Ca(OH)₂), aluminium magnesium oxide (MgO · Al₂O₃), titanium white such as rutile and anatase, titanium black (TiO₂ₙ₋₁), calcined clay (Al₂O₃ · 2SiO₂), kaolin (Al₂O₃ · 2SiO₂ · H₂O), pyrophyllite (Al₂O₃ · 4SiO₂ · H₂O), bentonite (Al₂O₃ · 4SiO₂ · 2H₂O), talc (3MgO · 4SiO₂ · H₂O), attapulgite (5MgO · 8SiO₂ · 9H₂O), magnesium calcium silicate (CaMgSiO₄), aluminium silicate (Al₂Si₂O₅(OH)₄ such as Al₂O₃ · 2SiO₂ · 2H₂O), magnesium silicate (MgSiO₃), calcium silicate (CaO · SiO₂ · yH₂O), crystalline aluminosilicate containing hydrogen, alkali metal or alkaline earth metal for compensating electric charges such as various types of zeolite and the like. These inorganic compounds may be used alone or in combination of two or more.

Among the inorganic compounds described above, an inorganic compound represented by the following general formula (II) is preferred.

Al₂O₃ · mSiO₂ · nH₂O (II)

(where m is an integer from 0 to 4 and n is an integer from 0 to 4.)

The inorganic compound includes, for example, alumina such as γ-alumina and α-alumina, alumina monohydrate such as boehmite or diaspore, aluminium hydroxide such as gibbsite or bayerite, calcined clay, kaolinite, pyrophyllite, bentonite and the like. These inorganic compounds may be used alone or in combination of two or more.

The inorganic compound has a particle diameter of preferably 10 µm or less and more preferably 3 µm or less. If the particle size of the inorganic compound is excessively large, destruction property and wearing resistance of rubber products may sometimes be worsened.

The amount of the inorganic compound to be used is preferably from 5 to 200 parts by mass, more preferably from 5 to 67 parts by mass and further preferably from 7 to 60% by mass based on 100 parts by mass of the diene-based rubber contained in the dispersion liquid of the diene-based rubber. In a case the amount of the inorganic compound is little, an improvement in gripping performance on wet road surface becomes difficult to be obtained in the form of a tire product. On the other hand, in a case the amount is too much, it is not preferred resulting in a problem of sometimes making a production of the composite difficult, and even when it can be produced, a problem of worsening dispersibility of the inorganic compound in the diene-based rubber or hardening the composite remarkably occurs.

When a diene-based rubber-inorganic compound composite is produced by using the inorganic compound described above, the inorganic compound may be used as it is for the purpose of previously mixing with other materials, or it may be used being dissolved or dispersed in an aqueous medium such as water. In the latter case, a colloid mill, a vibrating mill, a homogenizer, a dyno-mill, a ball mill, a tube mill, a super mixer and the like can be used.

In order to use the inorganic compound represented by the general formula (I) described above as the inorganic compound constituting the composite, a material capable of forming the above inorganic compound (hereinafter also referred to as "inorganic compound-forming material") can also be used as a starting material for production in the present invention.

The inorganic compound-forming material may be either an inorganic substance or an organic-based substance. The inorganic substance may be used a metal salt, a salt of oxo acid comprising metal and the like, including (1) aluminium salt such as aluminium chloride, aluminium nitrate, aluminium sulfate, basic aluminium chloride, basic aluminium sulfate and polyaluminium chloride, (2) calcium nitrite, calcium nitrate, calcium chloride, magnesium chloride (hexahydrate), magnesium nitrate (hexahydrate), magnesium sulfate, titanium trichloride, titanium tetrachloride and the like, (3) aluminate such as sodium aluminate (aluminium salt of oxo acid) and the like. These compounds may be used alone or in combination of two or more.

These compounds may be used in the form being dissolved or dispersed in water, acid, alkali or the like.

Further, these compounds may be used with addition of silicon salt (such as silicon chloride) and/or silicon salt of oxo acid (silicate such as sodium silicate). In this case, silicate, aluminium salt or aluminate may be used as a same aqueous solution or respective aqueous solutions may be prepared separately and used.

On the other hand, the organic-based substance may be used an organic metal compound and an alkoxide comprising various metal is preferable. The organic-based substance includes triethoxy aluminium, tripropoxy aluminium, diethoxy magnesium, dipropoxy magnesium, tetraethoxy titanium, tetrapropoxy titanium, a compound having a hydrolizable halogen atom such as chlorine by substituting in at least one of the compound, and the like. These compounds may be used alone or in combination of two or more.

These organic metal compounds are usually used in a state being dissolved in an organic solvent, for example, a water soluble alcohol such as ethanol, methanol and isopropyl alcohol. Accordingly, a solution comprising an inorganic compound-forming material is obtained by adding water to a solution of the organic metal compound thereby hydrolyzing the organic metal compound and then condensating the hydrolyzates. In the reaction of the organic metal compound and water, an acidic material or an alkaline material may be added optionally in order to promote the condensation reaction. These materials may be added also as an aqueous solution of acid or alkali.

The organic-based substance obtained as described above, a solution comprising the organic-based substance or a dispersion liquid containing the organic-based substance may also be used in admixture with a solution comprising the inorganic substance or a dispersion liquid comprising the inorganic substance. When the substance is used, controlling pH and the like may also be conducted optionally.

Further, the inorganic compound-forming material can be used in combination with the inorganic compound.

For obtaining the inorganic compound represented by the general formula (II) as the inorganic compound described above, an aluminium-containing solution where an aluminium salt of a salt of an inorganic acid and/or a salt of an organic acid, an organic aluminium salt and the like are dissolved or dispersed in water, an acid or an alkali or the like can be used. Most of the compounds correspond to the inorganic compound-forming material described above.

The salt of an inorganic acid and the salt of an organic acid include, for example, an aluminate such as sodium aluminate; a salt of an oxo acid such as sulfate, sulfite, hyposulfite, nitrate, nitrite, hyponitrite, chlorate, chlorite, hypochlorite, bromate, bromite, hypobromite, phosphate, phosphite, hypophosphite, acetate, succinate, phthalate and hexanoate; a salt of a hydroacid such as a salt of hydrochloric acid (chloride, polychloride); an aluminosilicate and the like. Further, these may be used alone or in combination of two or more.

The above compound that is insoluble to a medium such as water, an acid and an alkali may be used in a state of dispersing the same in the medium. A colloid mill, a homogenizer and the like exemplified above can be used in dispersing.

In addition, a dispersion liquid of the above compound which is prepared by the following methods and the like can be also used.
(1) One prepared by gelling a basic aluminium salt under heating and neutralizing it with a base.
(2) Alumina gel as obtained by mixing an aluminium salt such as aluminium chloride and an aluminate, and neutralizing them.
(3) One prepared by reacting an aluminate and a mineral acid, or reacting an aluminium salt such as aluminium sulfate and an alkali such as sodium hydroxide to aluminium hydroxide, and finely dispersing precipitates of aluminium hydroxide by stirring while shearing into an aqueous medium such as water.
(4) Alumina sol obtained by peptizing an alumina gel prepared from sodium aluminate, aluminium sulfate or the like as described in Japanese Examined Patent Publication No. Sho 40-8409.

Further, among the organic aluminium salt described above, the above aluminium alkoxide including, for example, trimethoxy aluminium, triethoxy aluminium, tripropoxy aluminum, tributoxy aluminum and the like is preferable. In addition, a compound where an alkoxyl group constituting the compound is substituted with a halogen atom such as chlorine may be used. These may be used alone or in combination of two or more.

The aluminium-containing solution obtained as described above may be used alone or in combination of two or more. Additionally, one prepared by using the aluminium salt and other prepared by using an organic aluminium salt may also be used in combination (for example, a solution prepared by using an aluminate and a solution prepared by using an organic aluminium salt mixed at an optional ratio).

Further, the inorganic compound-forming material described above may be the one obtained by applying an alkali treatment to a simple substance metal (Al, Mg, Ti or Ca) of metal element constituting the general formula (I).

The amount of the inorganic compound-forming material to be used is selected such that the amount of the inorganic compound of the general formula (I) or (II) to be formed is, preferably from 5 to 200 parts by mass, more preferably from 5 to 67 parts by mass and further preferably from 7 to 60 parts by mass based on 100 parts by mass of the diene-based rubber contained in the dispersion liquid of the diene-based rubber. In a case of forming a composite containing the inorganic compound by using the inorganic compound-forming material, the amount of use may be selected while taking it into consideration of byproducts to be incorporated. Also in a case of using the inorganic compound-forming material and the inorganic compound described above together, the amount of use for both of them may be selected by the same method.

The feature of the production process of the diene-based rubber-inorganic compound composite according to the prevent invention is to comprise a step of mixing the dispersion liquid of the diene-based rubber, the inorganic compound and/or the inorganic compound-forming material and, further, an anionic compound.

The anionic compound is not particularly restricted providing it has a negative charge. The anionic compound includes, for example, an anionic surfactant having a carboxyl group, a sulfonate group, a phosphate group and the like. In the present invention, a compound having a carboxyl group is particularly preferred. "Carboxyl group" means herein -COOH and -COO⁻. In addition, the number of the carboxyl group present in one molecule of the compound is not also restricted. The compound includes a rosinate, and a salt of a fatty acid exemplified as the anionic surfactant (emulsifier) in the explanation for the diene-based rubber, a naphthenate, an ether carboxylate, an alkenyl succinate, an N-acylsalcinate, N-acylglutaminate and the like. These may be used alone or in combination of two or more.

The rosinate includes, for example, alkali metal salt, alkaline earth metal salt and ammonium salt of rosin acid and the like. The alkali metal atom includes, for example, lithium, sodium, potassium and the like. As the rosinate used in the present invention, potassium salt is preferred.

The salt of a fatty acid includes, for example, potassium salt, sodium salt, lithium salt, ammonium salt and lower amine salt of a fatty acid having from 10 to 20 carbon atoms, and the like. Among these, a palmitate, a stearate, a laurate, a linolate and a linolenate are preferred.

The anionic compound may be used as it is (solid or the like), or in a state dissolved or dispersed in a dispersion liquid of the diene-based rubber, a dispersion liquid or a solution of the inorganic compound or an aqueous medium constituting a dispersion liquid or a solution of the inorganic compound-forming material.

The amount of the anionic compound to be used is preferably from 0.5 to 10 parts by mass and more preferably from 1 to 6 parts by mass based on 100 parts by mass of the diene-based rubber contained in the dispersion liquid of the diene-based rubber. When the amount of use of the anionic compound is little, the obtained diene-based rubber-inorganic compound composite is sometimes excessively small.

Since the anionic compound is also used for the production of a dispersion liquid of a diene-based rubber as described above, an excess anionic compound during production of the diene-based rubber may also be used.

In the "step of mixing the inorganic compound and/or the material capable of forming the inorganic compound, the anionic compound and the dispersion liquid of the diene-based rubber" in the production process of the present invention, the mixing method is not particularly restricted. That is, each of the ingredients may be collectively mixed, or those mixed divisionally may be finally mixed collectively. Preferred mixing methods are, for example, (1) a method of mixing the inorganic compound and/or the inorganic compound-forming material and the anionic compound, and then mixing the same with the dispersion liquid of the diene-based rubber, (2) a method of mixing the inorganic compound and/or the inorganic compound-forming material and a portion of the dispersion liquid of the diene-based rubber, mixing this mixture with the anionic compound, and further mixing the same with the remaining portion of the dispersion liquid of the diene-based rubber, (3) a method of mixing the dispersion liquid of the diene-based rubber and the anionic compound, and then further mixing this mixture with the inorganic compound and/or the inorganic compound-forming material, and the like.

Then, when a diene-based rubber-inorganic compound composite is recovered from the above mixture, a general method for coagulating a rubber component from a latex may be applied to recover a coagulation product. And it may be recovered by removing the aqueous medium by the method of heating, depressurization or the like. The former method leads to more homogeneous diene-based rubber-inorganic compound composite, being preferable. In a case where an extending oil for rubber is blended previously to the dispersion liquid of the diene-based rubber, an oil-extended rubber-inorganic compound composite is recovered by coagulation.

The coagulation method is to add (1) an aqueous solution of sodium chloride or potassium chloride, (2) an aqueous solution of a salt of polyvalent metal including calcium, magnesium, zinc and aluminium, such as calcium chloride, magnesium chloride, zinc chloride, aluminium chloride, calcium nitrate, magnesium nitrate, zinc nitrate, aluminium nitrate, magnesium sulfate, zinc sulfate and aluminium sulfate, as an electrolyte constituent component and/or (3) optionally hydrochloric acid, nitric acid, sulfuric acid and the like, whereby a diene-based rubber-inorganic compound composite can be coagulated as a crumb. These substances may be used alone or in combination of two or more. In this step, fine inorganic compound can also be coagulated by using a polymeric coagulant (anionic, nonionic and cationic, particularly, anionic or nonionic type) and the like. Temperature, pH and the like upon co-coagulation are not particularly restricted. And for the purpose of reducing inorganic salts remaining in the diene-based rubber-inorganic compound composite to be produced, conditions are controlled so that temperature is 10°C or higher, preferably in a range from 10 to 80°C and more preferably from 10 to 50°C, and pH value (pH value at 25°C) is in a range between 2 and 14 (more preferably, between pH 4 and 11). When the temperature is lower than 10°C, it does not tend to be industrially suitable. On the other hand, when the temperature is excessively high, no large crumbs may be obtained. Large composite can be obtained by co-coagulation within a lower temperature range among the preferred temperature range described above.

After co-coagulation of the diene-based rubber and the inorganic compound, the emulsifier, the electrolyte and the like are removed usually by water-washing the coagulation products and then water was removed by hot blow drying or vacuum drying to conduct drying. With the procedures described above, a composite where the inorganic compound is uniformly dispersed in the diene-based rubber can be obtained.

A number-average particle diameter of the diene-based rubber-inorganic compound composite produced according to the present invention is usually from 1 to 50 mm and preferably from 3 to 20 mm. In a case where the particle diameter of the diene-based rubber-inorganic compound composite is in a range described above, crumbs capable of improving the operation efficiency during production can be obtained.

A second process for producing a diene-based rubber-inorganic compound composite (hereinafter also referred to as "diene-based rubber-aluminium hydroxide composite") according to the present invention is process for producing a composite comprising a diene-based rubber and aluminium hydroxide and is characterized by comprising a step of preparing an aluminium-containing suspension controlled to between pH 5.1 and 8.4, and a step of mixing the aluminium-containing suspension and a dispersion liquid of a diene-based rubber thereby co-coagulating the diene-based rubber and aluminium hydroxide, successively.

The diene-based rubber described above is the same as the diene-based rubber in the explanation for the first production process of the diene-based rubber-inorganic compound composite.

In the following, the "aluminium-containing suspension" is to be described.

The aluminium-containing suspension is not particularly restricted providing pH is in a range between 5.1 and 8.4, preferably between 5.5 and 8.3, more preferably between 6.0 and 8.0 and particularly preferably between 6.5 and 7.5 and providing the suspension comprises an ingredient capable of forming aluminium hydroxide. And the suspension may be one where an Al ingredient (aluminium ion, ion of aluminium compound and the like) is dissolved or one where an aluminium compound is contained while dispersing.

A specific example of the aluminium-containing suspension includes one where an aluminium salt is dissolved or dispersed in water, an acid or an alkali, one that a solution of an organic metal compound (organic aluminium compound) and the like controlled to pH in a range between 5.1 and 8.4. In controlling pH, an acid (such as sulfuric acid, hydrochloric acid) or an alkali (such as sodium hydroxide, potassium hydroxide) and the like can be used.

Irrespective of the contained Al component state (chemical state), it is necessary to control pH of the aluminium-containing suspension in a range between 5.1 and 8.4 before mixing with the dispersion liquid of the diene-based rubber. In addition, since the aluminium-containing suspension sometimes precipitates partially, it is preferably stirred in order to prevent formation of precipitates during or after controlling pH.

In a case where pH of the aluminium-containing suspension is less than 5.1, a yield of aluminium hydroxide in the obtained composite tends to be lowered. On the other hand, in a case where pH exceeds 8.4, a coagulation of the diene-based rubber is incomplete and the diene-based rubber and an aluminium compound containing aluminium hydroxide tend to be separated even when an acid is added for completing the coagulation.

The aluminium salt may be either a salt of an inorganic acid or a salt of organic acid. The salt of an inorganic acid and the salt of an organic acid include, for example, an aluminate such as sodium aluminate; a salt of an oxo acid such as sulfate, sulfite, hyposulfite, nitrate, nitrite, hyponitrite, chlorate, chlorite, hypochlorite, bromate, bromite, hypobromite, phosphate, phosphite, hypophosphite, acetate, succinate, phthalate and hexanoate; a salt of a hydroacid such as a salt of hydrochloric acid (chloride, polychloride); alumina (Al₂O₃) such as γ-alumina and α-alumina; alumina monohydrate (Al₂O₃ · H₂O) such as boehmite and diaspore; aluminium hydroxide (Al(OH)₃) such as gibbsite and bayerite; aluminium magnesium oxide (MgO · Al₂O₃); aluminium silicate (Al₂Si₂O₅, Al₂O₃ · 2SiO₂ · 2H₂O and the like); an aluminosilicate and the like. Further, these may be used alone or in combination of two or more.

The above aluminium salt that is insoluble to a medium such as water, an acid and an alkali may be used in a state of dispersing the same in the medium by stirring under shearing. A colloid mill, a vibration mill, a homogenizer, a dyno-mill, a ball mill, a tube mill a super mixer and the like can be used in stirring under shearing.

In addition, a dispersion liquid of the aluminium salt which is prepared by the following method and the like can be also used.
(1) One prepared by gelling a basic aluminium salt under heating and neutralizing it with a base.
(2) Alumina gel as obtained by mixing an aluminium salt such as aluminium chloride and an aluminate, and neutralizing them.
(3) One prepared by reacting an aluminate and a mineral acid, or reacting an aluminium salt such as aluminium sulfate and an alkali such as sodium hydroxide to aluminium hydroxide, and dispersing precipitates of aluminium hydroxide finely by stirring while shearing into an aqueous medium such as water.
(4) Alumina sol obtained by peptizing an alumina gel prepared from sodium aluminate, aluminium sulfate or the like as described in Japanese Examined Patent Publication No. Sho 40-8409.

Among the aluminium salts, an aluminate (such as sodium aluminate) which is easily soluble in water is preferred. While sodium aluminate exhibits strong alkalinity when dissolved in water and pH can be controlled by adding an acid such as sulfuric acid and hydrochloric acid.

Further, among the organic aluminium compounds described above, the aluminium alkoxide including, for example, trimethoxy aluminium, triethoxy aluminium, tripropoxy aluminum, tributoxy aluminum and the like is preferable. In addition, a compound where an alkoxyl group constituting the compound is substituted with a halogen atom such as chlorine may be used. These may be used alone or in combination of two or more.

The organic aluminium compound is usually used in a state being dissolved in an organic solvent, for example, a water soluble alcohol such as ethanol, methanol and isopropyl alcohol. Accordingly, a solution comprising an Al component is obtained by adding water to a solution of the organic metal compound thereby hydrolyzing the organic metal compound and then condensing the hydrolyzate. In the reaction of the organic metal compound and water, an acid or an alkali may be added optionally in order to promote the condensation reaction. These may be added also as an aqueous solution of acid or alkali. By controlling the pH of the solution, the aluminium-containing suspension according to the present invention can be prepared.

The obtained aluminium-containing suspension may be used alone or in combination of two or more. Further, one prepared by using an aluminium salt and one prepared by using a metal aluminium compound may also be used in combination (for example, a suspension prepared by using an aluminate and a suspension prepared by using an organic aluminium compound at an optional ratio).

Further, the aluminium-containing suspension may sometimes exhibit a slurry state in a case where pH is in a range between 5.1 and 8.4. In this state and also in a completely dissolved state, mixing the aluminium-containing suspension with the dispersion liquid of the diene-based rubber described above can be proceeded.

In "the step of mixing an aluminium-containing suspension and a dispersion liquid of the diene-based rubber thereby coagulating the diene-based rubber and aluminium hydroxide" in the present invention, a method of mixing a dispersion of the diene-based rubber and a aluminium-containing suspension is particularly restricted. The suspension and the dispersion liquid may be collectively mixed or may be mixed while being added divisionally. In batchwise production, a method of continuously adding a dispersion liquid of a diene-based rubber to an aluminium-containing suspension is preferred. In addition, in continuous production, an example of preferred method is continuously adding a dispersion liquid of a diene-based rubber to an aluminium-containing suspension so as to keep a predetermined content ratio between aluminium hydroxide and the diene-based rubber constituting a composite. The mixing temperature is usually in a range between 10 and 80°C, preferably between 20 and 60°C, and further preferably between 30 and 50°C.

In the mixing of a dispersion liquid of a diene-based rubber and an aluminium-containing suspension, it is preferred that the solid content of the diene-based rubber contained in the dispersion liquid of the diene-based rubber and the amount of Al contained in the aluminium-containing suspension (being converted as Al₂O₃) are controlled to the range described below. That is, Al₂O₃ is preferably in a range from 3 to 130 parts by mass and more preferably from 5 to 100 parts by mass based on 100 parts by mass of the diene-based rubber. In a case where the amount is insufficient, effect as filler is not sufficient. On the other hand, in a case where it is excessive, effect as rubber tends to be insufficient.

Although coagulation starts in the instant of mixing an aluminium-containing suspension and a dispersion liquid of a diene-based rubber and a coagulation product comprising the diene-based rubber-aluminium hydroxide composite (hereinafter also referred to as "crumb") is formed, coagulation is not sometimes completed in a case where pH of the mixed solution increases due to the effect of the dispersion liquid of the diene-based rubber which is usually alkaline (clouding remains in the liquid mixture). In such a case, to add an acid, a coagulation accelerator and the like is preferable for completing the coagulation. In a case of adding the acid, it is desired that sulfuric acid or hydrochloric acid, preferably, sulfuric acid is used to control pH in a range between 5.0 and 8.0. In this case, when pH is lowered to less than pH5.0, the content of the resultant aluminium hydroxide is deteriorated. After completion of the coagulation (after clouding of the liquid mixture disappears), pH may be lower than 5.0. Further, the coagulation accelerator includes an electrolyte solution and the like.

The electrolyte solution described above includes (1) an aqueous solution of sodium chloride or potassium chloride, (2) an aqueous solution of a salt of polyvalent metal including calcium, magnesium, zinc and aluminium, such as calcium chloride, magnesium chloride, zinc chloride, aluminium chloride, calcium nitrate, magnesium nitrate, zinc nitrate, aluminium nitrate, magnesium sulfate, zinc sulfate and aluminium sulfate, and/or, (3) optionally hydrochloric acid, nitric acid, sulfuric acid and the like. Among these, a salt of polyvalent metal including calcium, magnesium and aluminium is preferable, and particularly, calcium chloride, magnesium chloride, magnesium sulfate and the like are preferred. These substances may be used alone or in combination of two or more. In this step, fine alminium hydoroxide can also be coagulated by using a polymeric coagulant (anionic, nonionic and cationic, particularly, anionic or nonionic type) and the like.

Subsquently, it goes to a step of recovering the diene-based rubber-aluminium hydroxide composite as a coagulation product.

After co-coagulation of the diene-based rubber and aluminium hydroxide, the emulsifier, the electrolyte and the like are removed usually by water-washing the coagulation products and then water was removed by hot blow drying or vacuum drying to conduct drying. With the procedures described above, a composite where aluminium hydroxide is uniformly dispersed in the diene-based rubber can be obtained.

In addition, a method of removing the aqueous medium from the mixture comprises a method of cast-drying the mixture and then applying vacuum drying and a drying method using a drum dryer.

A content of aluminium hydroxide contained in the diene-based rubber-aluminium hydroxide composite produced according to the present invention is preferably from 5 to 200 parts by mass and more preferably from 7 to 150 parts by mass based on 100 parts by mass of the rubber components. Other inorganic compounds than aluminium hydroxide usually includes a salt comprising an anion used for the controlling pH of the aluminium-containing suspension and an aluminium ion, for example, aluminium sulfate.

Further, a particle diameter of the diene-based rubber-aluminium hydroxide composite is usually from 10 µm to 50 mm and preferably from 50 µm to 20 mm.

And a number-average particle diameter of aluminium hydroxide constituting the diene-based rubber-inorganic compound composite produced according to the present invention can be 500 nm or less, preferably from 1 to 300 nm and more preferably 5 to 100 nm and further preferably from 5 to 50 nm.

The diene-based rubber-inorganic compound composite produced by the first and second production processes for the diene-based rubber-inorganic compound composite according to the present invention can be used together with an additive for a preparation of a rubber composition. As the additive, a crosslinking agent including a vulcanizing agent, a filler for reinforcing, other fillers, a coupling agent, a vulcanization accelerator, fatty acids and the like are blended. In addition, other rubber components, other diene-based rubber-inorganic compound composites may be blended optionally.

The crosslinking agent includes a vulcanizing agent such as sulfur and a sulfur-containing compound or a non-sulfur type crosslinking agent such as a peroxide. Among these, the former type vulcanizing agent, particularly, sulfur is preferred. An amount of the vulcanizing agent to be blended is usually from 0.5 to 10 parts by mass and particularly preferably from 1 to 6 parts by mass based on 100 parts by mass of the entire amount of the rubber component.

The filler for reinforcing includes, for example, carbon black, silica and the like.

The carbon black includes, for example, channel black, furnace black, acetylene black, thermal black and the like depending on the production process and any of them may be used. In addition, one having a nitrogen adsorption specific surface area (BET value measured according to ASTM D 3037-88) of 70 m²/g or more and a dibutyl phthalate oil absorption amount of 90 ml/100 g or more (JIS K 6221-1982 (A method) is preferred.

In a case where the BET value is less than 70 m²/g, a sufficient wearing resistance is difficult to occur. In a case where the BET value is excessive, it causes worsening of fuel consumption by a tire. A more preferred range of the BET value is from 90 to 180 m²/g in view of wearing resistance and fuel consumption.

Additionally, in a case where the DBP value is less than 90 ml/100 g, a sufficient wearing resistance can not be obtained. In a case where the DBP value is excessive, it causes deterioration of elongation at break of rubber products. In view of wearing resistance and fuel consumption, a more preferred range for the DBP value is from 100 to 180 ml/100g.

As silica, one used so far for reinforcing a rubber, for example, a dry process silica, a wet process silica (hydrous silicic acid) and the like can be used. Among these, the wet process silica is preferred. Silica having the nitrogen adsorption specific surface area (BET value) in a range from 100 to 300 m²/g is preferred in view of wearing resistance, fuel consumption and the like. The BET value is a value measured after drying at 300°C for 1 hour according to ASTM D 4820-93.

As the filler for reinforcing, only carbon black may be used or only silica may be used. Further, carbon black and silica may be used together. Further, an amount of the reinforcing filler to be blended is, preferably from 5 to 100 parts by mass, more preferably from 30 to 85 parts by mass based on 100 parts by mass of the entire amount of the rubber component, with a view point of balance for wearing resistance, wet performance and fuel consumption.

Other fillers include, for example, clay, calcium carbonate, magnesium carbonate and the like. These may be used alone or in combination of two or more.

The coupling agent is not particularly restricted and a silane coupling agent is preferred. The silane coupling agent includes, for example, vinyl trichloro silane, vinyl triethoxy silane, vinyl tris(β-methoxy-ethoxy) silane, β-(3,4-epoxy cyclohexyl)-ethyltrimethoxy silane, γ-glycidoxypropyl trimethoxy silane, γ-glycidoxypropylmethyl diethoxy silane, γ-methacryloxypropyl trimethoxy silane, N-(β-aminoethyl)-γ-aminopropyl trimethoxy silane, N-(β-aminoethyl)-γ-aminopropylmethyl dimethoxy silane, N-phenyl-γ-aminopropyltrimethoxy silane, γ-chloropropyl trimethoxy silane, γ-mercaptopropyl trimethoxy silane, γ-aminopropyl trimethoxy silane, bis-(3-(triethoxysilyl)propyl) tetrasulfide, bis-(3-(triethoxysilyl)propyl) disulfide, γ-trimethoxysilylpropyl dimethyl thiocarbamyl tetrasulfide, γ-trimethoxysilylpropyl benzothiazyl tetrasulfide and the like. These may be used alone or in combination of two or more. When the coupling agent is blended, wearing resistance or tan δ is more improved.

An amount of the coupling agents to be blended is preferably 20 parts by mass or less and more preferably 15 parts by mass or less (usually 1 part by mass or more) based on 100 parts by mass of the entire amount of the inorganic compound contained in the rubber composition or the total amount together with the inorganic filler such as the reinforcing filler when it is blended additionally.

The vulcanization accelerator includes each of the compounds such as aldehyde ammonia-based, guanidine-based, thiourea-based, thiazole-based and dithiocarbamic acid-based. These may be used alone or in combination of two or more. An amount of the vulcanization accelerator to be blended is preferably from 0.5 to 15 parts by mass and particularly preferably from 1 to 10 parts by mass based on 100 parts by mass of the entire amount of the rubber component.

The fatty acids include, for example, a fatty acid and an ester compound thereof. These may be used alone or in combination of two or more.

The fatty acid is preferably a higher fatty acid and is usually a mono-carboxylic acid with a number of carbon atoms usually of 10 or more (preferably 12 or more, and usually 20 or less), which may be a saturated fatty acid or an unsaturated fatty acid, with the saturated fatty acid being preferred in view of the weather resistance. The fatty acid includes, for example, palmitic acid, stearic acid, lauric acid, oleic acid, linolic acid, linolenic acid and the like.

Further, as the ester compound of the fatty acid, an ester of a higher fatty acid and an alcohol compound is preferred. The number of carbon atoms of the alcohol compound is preferably from about 1 to 10. In addition, an ester of a higher alcohol (with the number of carbon atoms of about 10 or more, and about 20 or less) of a lower fatty acid (with the number of carbon atoms of about 1 to 10) can also be used.

The "other rubber component" described above means other rubber which is not constituting the composite and includes, for example, styrene-butadiene rubber, butadiene rubber, isoprene rubber, butadiene-isoprene rubber, butadiene-styrene-isoprene rubber, acrylonitrile-butadiene rubber, acrylonitrile-styrene-butadiene rubber, acrylic rubber, butyl rubber, natural rubber, chloroprene rubber and the like which are obtained by known methods. The rubber component described above may have a polar group. The rubber component may be an oil-extended rubber by an extending oil for rubber.

In addition to the additives described above, an extending oil for rubber, zinc oxide, a vulcanization aid, an anti-aging agent, a processing aid and the like can be blended properly.

The diene-based rubber-inorganic compound composite produced according to the present invention leads to a rubber product by the following manner. That is, the composite described above and, optionally, other rubber components, a reinforcing agent such as silica, carbon black and carbon-silica dual phase filler, an extending oil and other blending agents are kneaded by using a kneader such as a Banbury mixer at a temperature of 70 to 180°C. After that, a kneading product is cooled and a vulcanizing agent such as sulfur, a vulcanization accelerator and the like are blended by using a Banbury mixer or a mixing roll to prepare a rubber composition, which is then molded into a predetermined shape. Then, they were vulcanized at a temperature of 140 to 180°C to obtain a required vulcanized rubber, that is, a rubber product.

The rubber composition has a favorable processability and the obtained vulcanized rubber has excellent tensile strength, wearing resistance, wet skid resistance, impact resilience and is suitable particularly to a tire tread.

### BEST MODE FOR CARRYING OUT THE INVENTION

The present invention is to be described more specifically with examples. In Examples and Comparative examples, parts and % are on the mass basis unless otherwise specified.

### 1. Preparation of diene-based rubber (oil-extended diene-based rubber and non-oil-extended diene-based rubber)

### 1-1. Oil-extended diene-based rubber

To a nitrogen-replaced polymerization vessel, were charged 200 parts of water, 4.5 parts of rosin acid soap, predetermined amounts of butadiene and other monomers shown in Table 1 (total monomer is 100 parts.), and 0.3 part of tert-dodecyl mercaptan. Then, temperature of the polymerization vessel was set to 5°C, and polymerization was started by adding 0.1 part of p-menthane hydroperoxide as a polymerization initiator, 0.07 part of sodium ethylenediamine tetraacetate, 0.05 part of ferrous sulfate 7 hydrate and 0.15 part of sodium formaldehyde sulfoxylate. When the polymerization conversion reached 60%, diethyl hydroxylamine was added to stop polymerization. Then, unreacted monomers were recovered by steam stripping and an aqueous dispersion containing a diene-based rubber of about 21% solid content was obtained.

After that, for the aqueous dispersion of the diene-based rubber obtained by using the monomers shown in Table 1, 37.5 parts of aromatic oil (trade name; "Fukkol Aromax #3" manufactured by Fujikosan Co. Ltd.) based on 100 parts of the solid content of the contained diene-based rubber was blended, which was coagulated with sulfuric acid and sodium chloride to obtain crumbs. Then, the crumbs were washed with water and dried by a hot blow drier to obtain an oil-extended diene-based rubber (a to j in Table 1).

Contents of the monomer units constituting the oil-extended diene-based rubber obtained as described above and Mooney viscosity of the oil-extended diene-based rubber were measured by methods described below, and the results were shown together in Table 1.
(a) Bound styrene content (% by mass); it was determined by preparing a calibration curve according to an infrared absorption spectral method.
(b) Bound content of the monomer having carboxyl group (% by mass); it was determined by conducting an operation of dissolving rubber in toluene and reprecipitating the same with methanol twice thereby purifying the same and, after vacuum drying, dissolving the rubber into chloroform and then neutralizing titration.
(c) Bound content of the monomer having amino group or nitrile group (% by mass); it was determined by conducting an operation of dissolving rubber in toluene and reprecipitating the same with methanol twice thereby purifying the same and, after vacuum drying, applying elemental analysis and calculating the content based on the nitrogen content.
(d) Bound content of the monomer having hydroxyl group (% by mass); it was determined by conducting an operation of dissolving rubber in toluene and reprecipitating the same with methanol twice thereby purifying the same and, after vacuum drying, measuring by 270 MHz ¹H-NMR.
(e) Bound content of butyl acrylate (% by mass); it was determined by conducting an operation of dissolving rubber in toluene and reprecipitating the same with methanol twice thereby purifying the same and, after vacuum drying, measuring by 270 MHz ¹³C-NMR.
(f) Bound content of the monomer having alkoxysilyl group (% by mass); it was determined by conducting an operation of dissolving rubber in toluene and reprecipitating the same with methanol twice thereby purifying the same and, after vacuum drying, measuring by 270 MHz ¹H-NMR.
(g) Mooney viscosity [ML₁₊₄ (100°C)]; it was measured according to JIS K 6300-1994 under the condition at a measuring temperature of 100°C, preheating for one minute and by measurement for 4 minutes.

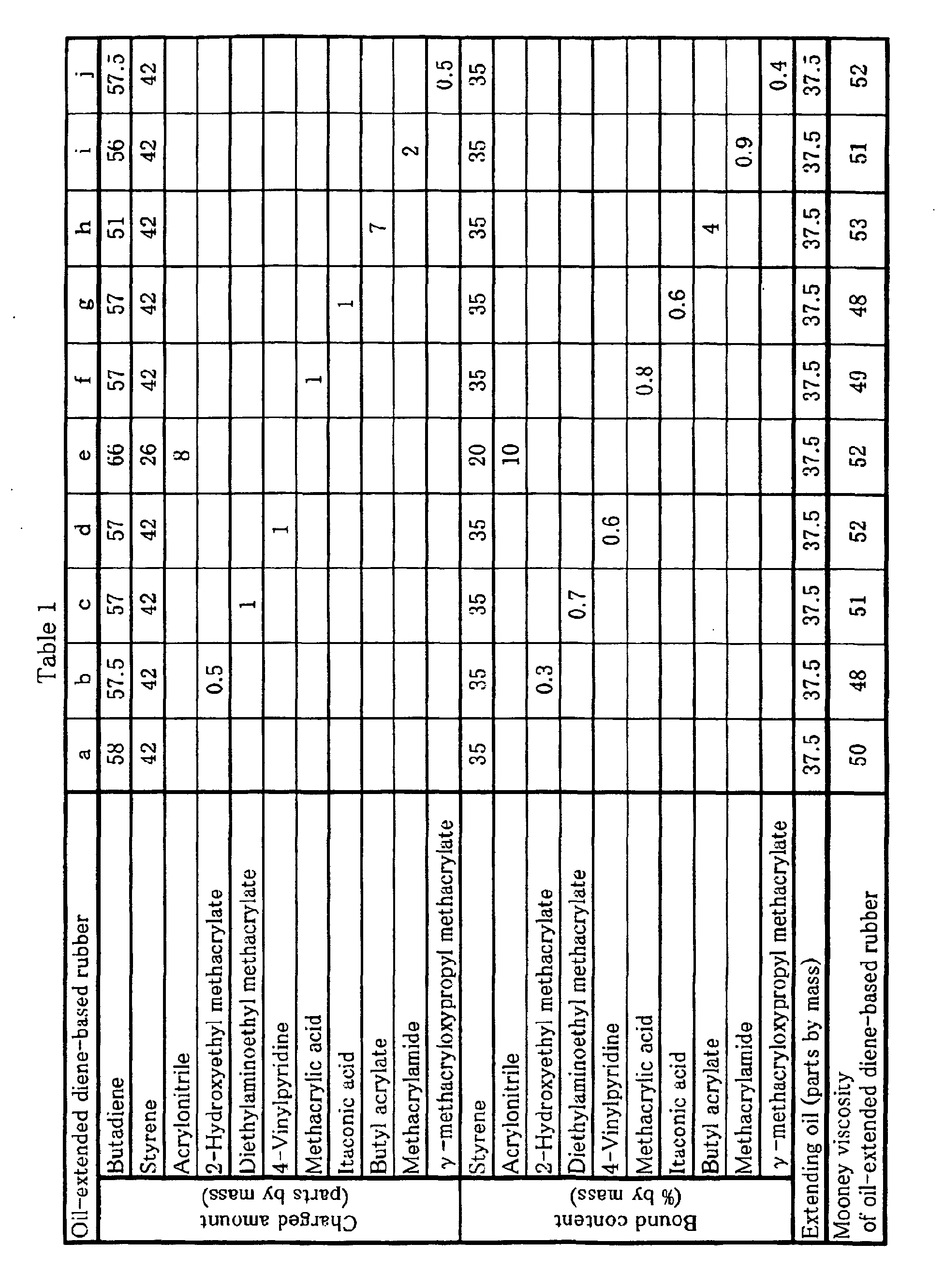

### 1-2. Non-oil-extended diene rubber

To a nitrogen-replaced polymerization vessel, were charged 200 parts of water, 4.5 parts of rosin acid soap, predetermined amounts of butadiene and other monomers shown in Table 2 (total monomer is 100 parts.), and 0.3 part (in a case of using styrene) or 0.7 part (in a case of not using styrene) of tert-dodecyl mercaptan. Then, temperature of the polymerization vessel was set to 5°C, and polymerization was started by adding 0.1 part of p-menthane hydroperoxide as a polymerization initiator, 0.07 part of sodium ethylenediamine tetraacetate, 0.05 part of ferrous sulfate 7 hydrate and 0.15 part of sodium formaldehyde sulfoxylate. When the polymerization conversion reached 60%, diethyl hydroxylamine was added to stop polymerization. Then, unreacted monomers were recovered by steam stripping and an aqueous dispersion containing a diene-based rubber of 21% solid content was obtained.

After that, the aqueous dispersion was coagulated with sulfuric acid and sodium chloride to obtain crumbs. Then, the crumbs were washed with water and then dried by a hot blow dryer to obtain a diene-based rubber (k to t in Table 2). Contents of the monomer units constituting the diene-based rubber and Mooney viscosity of the diene-based rubber were measured in the same manner as that for the oil-extended diene-based rubber described above and the results were shown together in Table 2.

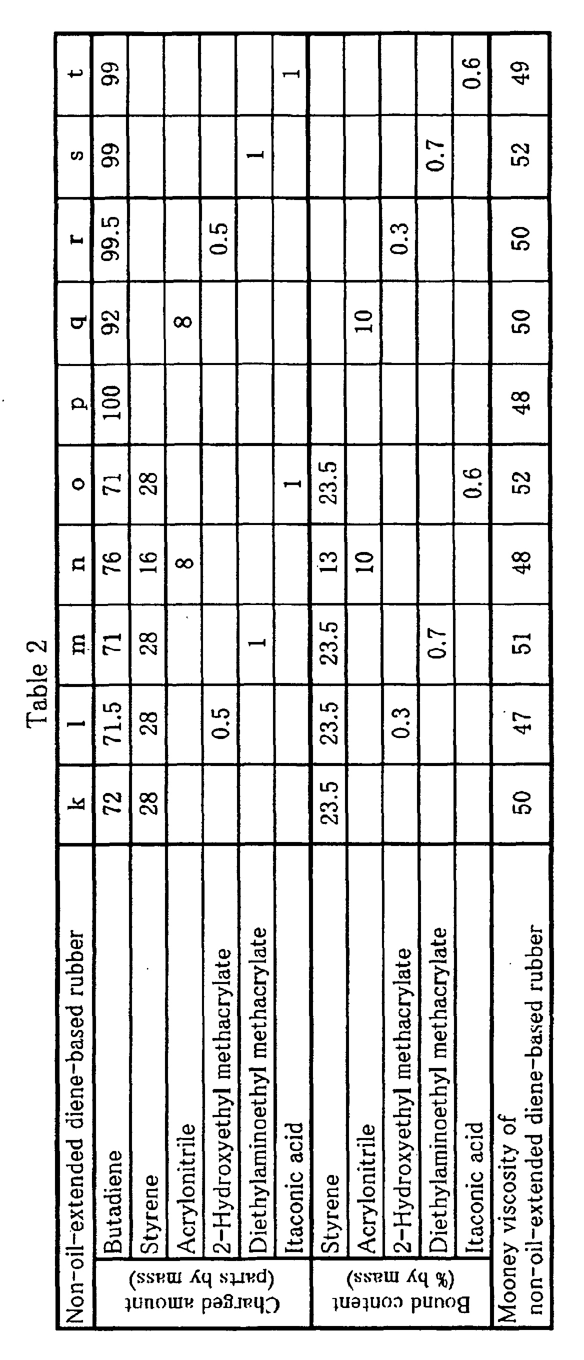

### 2. Production of diene-based rubber-inorganic compound composite (I)

The oil-extended diene-based rubber and non-oil-extended diene-based rubber obtained as described above and natural rubber latex "NR" (trade name; "HA" manufactured by Felder Rubber Co., solid content; 62%) were used such that the total amount for the respective rubber components was 100 parts, and production of the diene-based rubber-inorganic compound composites was conducted such that the content ratio for the rubber component and each of the inorganic compounds to be contained have the values shown in Table 3 in order to form five types of composite constitutions (i) to (v) shown in Table 3. For example, in a case of Table 3 (i), they are properly controlled so that a composite containing 30 parts of the inorganic compound based on 137.5 parts of the oil-extended diene-based rubber containing 100 parts of diene-based rubber is produced.

As the inorganic compound, those shown below were used.
(1) Aluminium hydroxide (gibbsite): trade name; "HIGILITE H-43M" manufactured by Showa Denko K. K., average particle diameter; 0.6µm.
(2) Alumina monohydrate (beohmite): trade name; "PURAL 200" manufactured by Condea Japan Co., average particle diameter; 0.14 µm.
(3) γ-Alumina: trade name; "Baikalox CR125" manufactured by Baikowski Co., average particle diameter; 0.3 µm.
(4) Fired clay: trade name; "POLYFIL 40" manufactured by J. M. Huber Co., average particle diameter; 1.2 µm.
(5) Kaolinite: trade name; "POLYFIL DL", manufactured by J. M. Huber Co., average particle diameter; 1.0 µm.
(6) Magnesium hydroxide: trade name; "KISUMA 5A" manufactured by Kyowa Kagaku Kogyo K. K., average particle diameter; 0.8 µm.
(7) Titanium oxide (anatase): trade name; "TIPAQUE A-100" manufactured by Ishihara Sangyo Co., average particle diameter; 0.15 µm.

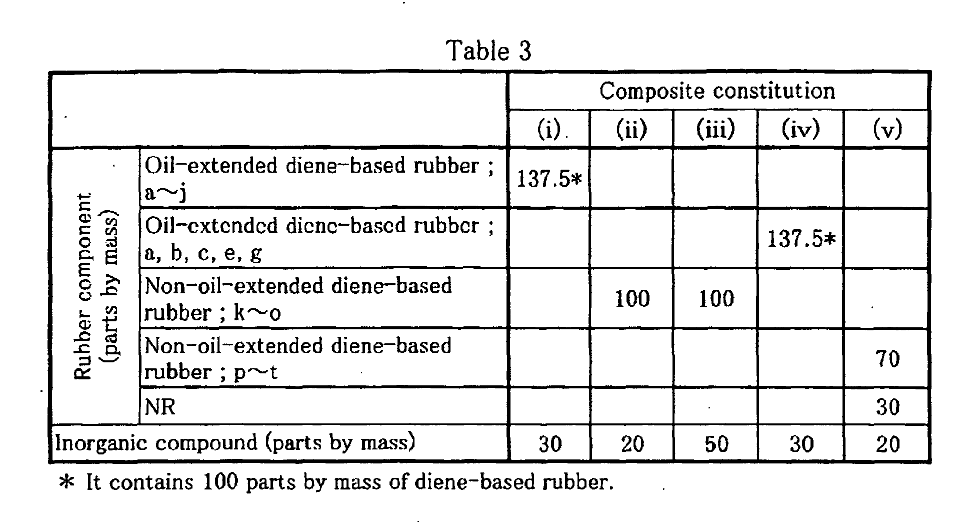

### 2-1. Method by homogenizer

### Example 1

For the composite constitution (i) shown in Table 3, 539 parts of an emulsion containing 137.5 parts of the oil-extended diene-based rubber (comprising 100 parts of a diene-based rubber) obtained as described above, a dispersion liquid prepared by dispersing 30 parts of the aluminium oxide (gibbsite) as the inorganic compound in 200 parts of water by using a homogenizer and 2 parts of potassium rosinate were stirred and mixed at 25°C.

After that, sulfuric acid was added to the resultant mixture and they were coagulated with sodium chloride while controlling pH of the mixed dispersion liquid to in a range between 4 and 5, to form crumbs. A size of the crumb was 8 mm or more and was equivalent to a size of the crumb comprising styrene-butadiene rubber produced by usual emulsion polymerization.

Then, the resultant crumbs were washed with water and were dried by a hot blow drier to obtain an oil-extended diene-based rubber-inorganic compound composite (refer to Table 5). The resultant composite was ashed by heating at 640°C for 8 hours using an electric furnace. The amount of the inorganic compound calculated based on the ash content was 30 parts being converted as inorganic compound based on 100 parts of the diene-based rubber.

"O" of "Diameter of coagulated crumb" in Table 5 means a case where the number-average particle diameter was 5 mm or more. This is the same in the following cases.

### Examples 2 to 40

For the composite constitution (i) shown in Table 3, oil-extended diene-based rubber-inorganic compound composites were produced in the same manner as Example 1 while changing the kinds of the oil-extended diene-based rubber and the inorganic compound. A size for each of the obtained crumbs was 5 mm or more.

### Examples 136 to 155

For the composite constitution (iv) shown in Table 3, oil-extended diene-based rubber-inorganic compound composites were produced in the same manner as Example 1 while changing the kinds of the oil-extended diene-based rubber and the inorganic compound. A size for each of the obtained crumbs was 5 mm or more.

The results of Examples 1 to 10 using aluminium hydroxide for the composite constitution (i) in Table 3 were shown in Table 5. And Examples 11 to 15 using alumina monohydrate were shown in Table 6, Examples 16 to 20 using γ-alumina were shown in Table 7, Examples 21 to 25 using calcined clay were shown in Table 8, Examples 26 to 30 using kaolinite were shown in Table 9, Examples 31 to 35 using magnesium hydroxide were shown in Table 10, and Examples 36 to 40 using titanium oxide were shown in Table 11, respectively.

In addition, the results of Examples 136 to 140 using aluminium hydroxide for the composite constitution (iv) in Table 3 were shown in Table 24, Examples 141 to 145 using alumina monohydrate were shown in Table 25, Examples 146 to 150 using Y-alumina were shown in Table 26, and Examples 151 to 155 using calcined clay were shown in Table 27, respectively.

### Comparative Example 1

An oil-extended diene-based rubber-inorganic compound composite was produced without addition of potassium rosinate in the same manner as Example 1. A size of crumb was measured by a light scattering type particle size distribution measuring apparatus (manufactured by Horiba Ltd.) and was 700 µm.

### Examples 71 to 105, Examples 116 to 125, and Examples 166 to 175

For composite constitution (ii) or (iii) shown in Table 3, 476 parts of an aqueous dispersion containing 100 parts of the non-oil-extended diene-based rubber obtained as described above, a dispersion liquid prepared by dispersing 20 parts or 50 parts of each of the inorganic compounds in 200 parts of water by using a homogenizer and 3 parts of potassium rosinate were stirred and mixed at 25°C.

After that, sulfuric acid was added to the resultant mixture and they were coagulated with sodium chloride while controlling pH of the mixed dispersion liquid in a range between 4 and 5, to form crumbs. An average diameter of the crumb was 5 mm or more and was equivalent to a size of the crumb comprising styrene-butadiene rubber produced by usual emulsion polymerization. Subsequent procedures were conducted in the same manner as Example described above, to obtain non-oil-extended diene-based rubber-inorganic compound composites. The resultant composite was ashed by heating at 640°C for 8 hours using an electric furnace. Each of the amounts of the inorganic compounds calculated from the ash content was 20 parts or 50 parts being converted as the inorganic compound based on 100 parts of the diene-based rubber.

The results of Examples 71 to 75 using aluminium hydroxide for the composite constitution (ii) in Table 3 were shown in Table 13. And Examples 76 to 80 using alumina monohydrate were shown in Table 14, Examples 81 to 85 using γ-alumina were shown in Table 15, Examples 86 to 90 using calcined clay were shown in Table 16, Examples 91 to 95 using kaolinite were shown in Table 17, Examples 96 to 100 using magnesium hydroxide were shown in Table 18, and Examples 101 to 105 using titanium oxide were shown in Table 19, respectively.

The results of Examples 116 to 120 using aluminium hydroxide for the composite constitution (iii) in Table 3 were shown in Table 21 and Examples 121 to 125 using aluminium hydrate were shown in Table 22, respectively.

In addition, the results of Examples 166 to 170 using aluminium hydroxide for the composite constitution (v) in Table 3 were shown in Table 29 and Examples 171 to 175 using aluminium monohydrate were shown in Table 30, respectively.

### 2-2. Method by in-situ (I) ,

### Example 41

For the composite constitution (i) shown in Table 3, 380 parts of 10% sulfuric acid was added to 2,570 parts of an aqueous 2.4% solution of sodium aluminate (0.9% being converted as Al₂O₃) and pH was controlled to 7, to obtain an aluminium-containing slurry solution comprising aluminium hydroxide as a main component. After that, 3 parts of potassium rosinate was added and stirred sufficiently at 25°C. Then, this liquid mixture, and an emulsion which is containing 100 parts of the diene-based rubber and 37.5 parts of an aromatic oil, and is having solid concentration of 21% were mixed under stirring to form a slurry comprising crumbs. A size of the crumb was 10 mm.

The obtained crumbs were washed with water and were dried by a hot blow drier to obtain an oil-extended diene-based rubber-inorganic compound composite. The introduction amount of the inorganic compound calculated based on the ash component of the obtained composite was 30 parts being converted as aluminium hydroxide (Al(OH)₃).

### Examples 42 to 50, Examples 106 to 110, Examples 126 to 130, Examples 156 to 160 and Examples 176 to 180

For five kinds of composite constitutions (i) to (v) shown in Table 3, oil-extended diene-based rubber-inorganic compound composites or non-oil-extended diene-based rubber-inorganic compound composites were produced in the same manner as Example 41 by using an emulsion of oil-extended diene-based rubber or an aqueous dispersion of non-oil-extended diene-based rubber (each containing 100 parts of a diene-based rubber).

The results of Examples 41 to 50 for the composite constitution (i) in Table 3 were shown in Table 12. And Examples 106 to 110 for the composite constitution (ii) were shown in Table 20, Examples 126 to 130 for the composite constitution (iii) were shown in Table 23, Examples 156 to 160 for the composite constitution (iv) were shown in Table 28 and Examples 176 to 180 for the composite constitution (v) were shown in Table 31, respectively.

### Comparative Example 2

An oil-extended diene-based rubber-inorganic compound composite was produced without addition of potassium rosinate in the same manner as Example 41. A size of crumb was measured by the above particle size distribution measuring apparatus and was 320 µm.

### 2-3. Method by in-situ (II)

### Example 51

For the composite constitution (i) shown in Table 3, 380 parts of 10% sulfuric acid was added to 2,570 parts of an aqueous 2.4% solution of sodium aluminate (0.9% being converted as Al₂O₃) and pH was controlled to 7, to obtain an aluminium-containing slurry solution comprising aluminium hydroxide as a main component. After that, 30% of a prescribed amount of an emulsion which is containing 100 parts of the diene-based rubber and 37.5 parts of an aromatic oil, and is having solid concentration of 21%, and the above aluminium-containing slurry solution were mixed while stirring at 25°C to form a slurry comprising crumbs. Then 3 parts of potassium rosinate and the remaining 70% of the above emulsion were added to the slurry and further mixed to form crumbs. A size of the crumb was 9 mm. The resultant crumbs were treated in the same manner as the Example described above to obtain an oil-extended diene-based rubber-inorganic compound composite (refer to Table 12).

### Examples 52 to 60

Oil-extended diene-based rubber-inorganic compound composites were produced by using emulsions containing the oil-extended diene-based b to j (containing 100 parts of a diene-based rubber) shown in Table 1 in the same manner as Example 51 (refer to Table 12).

### Comparative Example 3

An oil-extended diene-based rubber-inorganic compound composite was produced without addition of potassium rosinate in the same manner as Example 51. A size of crumb was measured by the above particle size distribution measuring apparatus and was 280 µm.

### 2-4. Method by in-situ (III)

### Example 61

For the composite constitution (i) shown in Table 3, 500 parts of 10% sulfuric acid was added to an aqueous solution prepared by adding 95 parts of sodium hydroxide to 2,660 parts of an aqueous 3.4% solution of aluminium sulfate (0.9% being converted as Al₂O₃) and controlled to pH 14, and pH was controlled to 7 to obtain an aluminium-containing slurry solution comprising aluminium hydroxide as a main component. After that, 3 parts of potassium rosinate was added and stirred sufficiently at 25°C. Then, this liquid mixture, and an emulsion which is containing 100 parts of diene-based rubber and 37.5 parts of aromatic oil, and is having solid concentration of 21% were mixed under stirring to form a slurry comprising crumbs. A size of the crumb was 8 mm. The resultant crumbs were treated in the same manner as in the Example described above to obtain an oil-extended diene-based rubber-inorganic compound composite (refer to Table 12).

### Examples 62 to 70, Examples 111 to 115, Examples 131 to 135, Examples 161 to 165 and Examples 181 to 185

For five kinds of composite constitutions (i) to.(v) shown in Table 3, oil-extended diene-based rubber-inorganic compound composites or non-oil-extended diene-based rubber-inorganic compound composites were produced in the same manner as Example 61 by using an emulsion of oil-extended diene-based rubber or an aqueous dispersion of non-oil-extended diene-based rubber (each containing 100 parts of a diene-based rubber).

The results of Examples 61 to 70 for the composite constitution (i) in Table 3 were shown in Table 12. And Examples 111 to 115 for the composite constitution (ii) were shown in Table 20, Examples 131 to 135 for the composite constitution (iii) were shown in Table 23, Examples 161 to 165 for the composite constitution (iv) were shown in Table 28 and Examples 181 to 185 for the composite constitution (v) were shown in Table 31, respectively.

### Comparative Example 4

An oil-extended diene-based rubber-inorganic compound composite was produced in the same manner as in Example 61 except for not using potassium rosinate. A size of crumb was measured by the above particle size distribution measuring apparatus and was 250 µm.

### 3. Preparation of rubber composition

Rubber compositions were prepared by using composites produced in Examples 1 to 185 described above and ingredients described below, and kneading two stages to be described below in accordance with the formulations A to E in Table 4. The "Inorganic compound" in Table 4 means each kind of the inorganic compound contained in the composites.
(1) "N339"; carbon black, trade name; "SEAST KH" manufactured by Tokai Carbon Co., LTD.
(2) "Silica"; silica, trade name; "NIPSIL AQ" manufactured by Nippon Silica Industrial Co., LTD.
(3) "Aromatic oil"; trade name; "Fukkol Aromax #3" manufactured by Fujikosan Co. Ltd.
(4) "Stearic acid"; trade name; "LUNAC S-30" manufactured by Kao Corp.
(5) "6C"; N-(1,3-dimethylbutyl)-N'-phenyl-p-phenylenediamine, anti-aging agent, trade name; "NOCRACK 6C" manufactured by Ouchishinko Chemical Industrial Co. Ltd.
(6) "Si69"; bis(triethoxysilylpropyl)tetrasulfan, silane coupling agent, trade name; "Si69" manufactured by Degussa Co.
(7) "DPG"; diphenyl guanizine, vulcanization accelerator, trade name; "NOCCELER-D" manufactured by Ouchishinko Chemical Industrial Co. Ltd.
(8) "DM"; dibenzothiazyl sulfide, vulcanization accelerator, trade name; "NOCCELER-DM" manufactured by Ouchishinko Chemical Industrial Co. Ltd.
(9) "NS"; N-tert-butyl-2-benzothiazoyl sulpheneamide, vulcanization accelerator, trade name; "NOCCELER-NS-F" manufactured by Ouchishinko Chemical Industrial Co. Ltd.

### (Kneading method in first stage)

Ingredients at the first stage were kneaded at a maximum temperature of 160°C by a kneading apparatus (trade name; "LABOPLASTMILL" manufactured by Toyo Seiki Seisaku-Sho, Ltd.) in accordance with the formulation shown in Table 4.

### (Kneading method at second stage)

Ingredients at the second stage were added to the kneading product as described above and kneaded by the above apparatus. The maximum temperature during kneading was 100°C.

In addition, as Comparative Examples 5 to 119, rubber compositions were prepared by using oil-extended diene-based rubbers a to j or non-oil-extended diene-based rubbers k to t, and commercially available aluminium hydroxide powder (trade name; "HIGILITE H-43M" manufactured by Showa Denko K. K., average particle diameter; 0.6 µm) by dry blending in accordance with the formulation in Table 6.

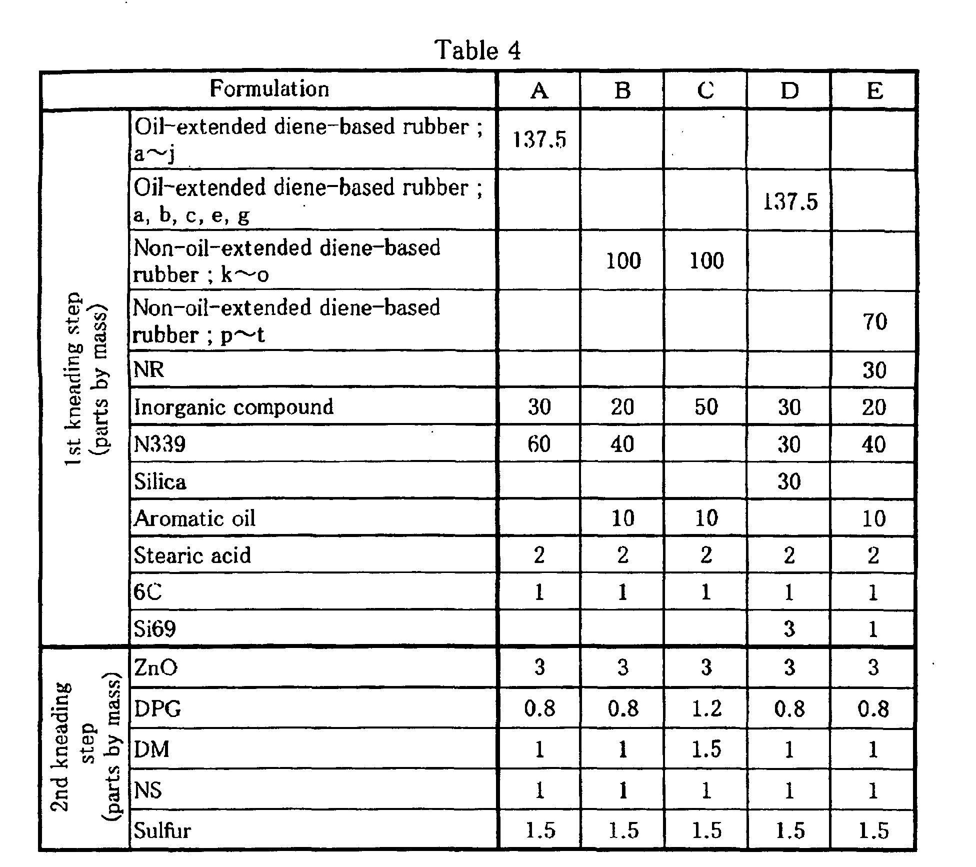

### 4. Evaluation of performance

The rubber compositions prepared as described above were heat-treated at 160°C for 15 minutes to obtain vulcanized products. The vulcanized products were used for specimens to be measured and the following evaluations were conducted.
(1) T_{B}; tensile strength was measured according to JIS K6251-1993 by using No. 3 type test specimen under a conditions at a measuring temperature of 25°C and at a tensile speed of 500 mm/minutes. The unit is MPa.
(2) Wearing resistance; abrasion loss at a slip ratio of 25% was calculated by using a Lambourn type wearing tester. A reciprocal for the abrasion loss at a measuring temperature of 25°C was indicated as an index based on 100 for the Comparative Example of the same series. The wearing resistance is better as the index is larger.

The foregoing results are shown in Tables 5 to 31.

The results of Examples 1 to 10 and 41 to 70 using aluminum hydroxide as the inorganic compound for the formulation A in Table 4 were shown in Tables 5 and 12. And Examples 11 to 15 using alumina monohydrate were shown in Table 6, Examples 16 to 20 using γ-alumina were shown in Table 7, Examples 21 to 25 using calcined clay were shown in Table 8, Examples 26 to 30 using kaolin were shown in Table 9, Examples 31 to 35 using magnesium hydroxide were shown in Table 10 and Examples 36 to 40 using titanium oxide were shown in Table 11, respectively.

The results of Examples 71 to 75 and 106 to 115 using aluminum hydroxide as the inorganic compound for the formulation B in Table 4 were shown in Tables 13 and 20. And Examples 76 to 80 using alumina monohydrate were shown in Table 14, Examples 81 to 85 using Y-alumina were shown in Table 15, Examples 86 to 90 using calcined clay were shown in Table 16, Examples 91 to 95 using kaolin were shown in Table 17, Examples 96 to 100 using magnesium hydroxide were shown in Table 18 and Examples 101 to 105 using titanium oxide were shown in Table 19, respectively.

The results of Examples 116 to 120 and 126 to 135 using aluminum hydroxide as the inorganic compound for the formulation C in Table 4 were shown in Tables 21 and 23, and Examples 121 to 125 using alumina monohydrate were shown in Table 22, respectively.

The results of Examples 136 to 140 and 156 to 165 using aluminum hydroxide as the inorganic compound for the formulation D in Table 4 were shown in Tables 24 and 28. And Examples 141 to 145 using alumina monohydrate were shown in Table 25, Examples 146 to 150 using γ-alumina were shown in Table 26 and Examples 151 to 155 using calcined clay were shown in Table 27, respectively.

The results of Examples 166 to 170 and 176 to 185 using aluminum hydroxide as the inorganic compound for the formulation E in Table 4 were shown in Tables 29 and 31, and Examples 171 to 175 using alumina monohydrate were shown in Table 30, respectively.

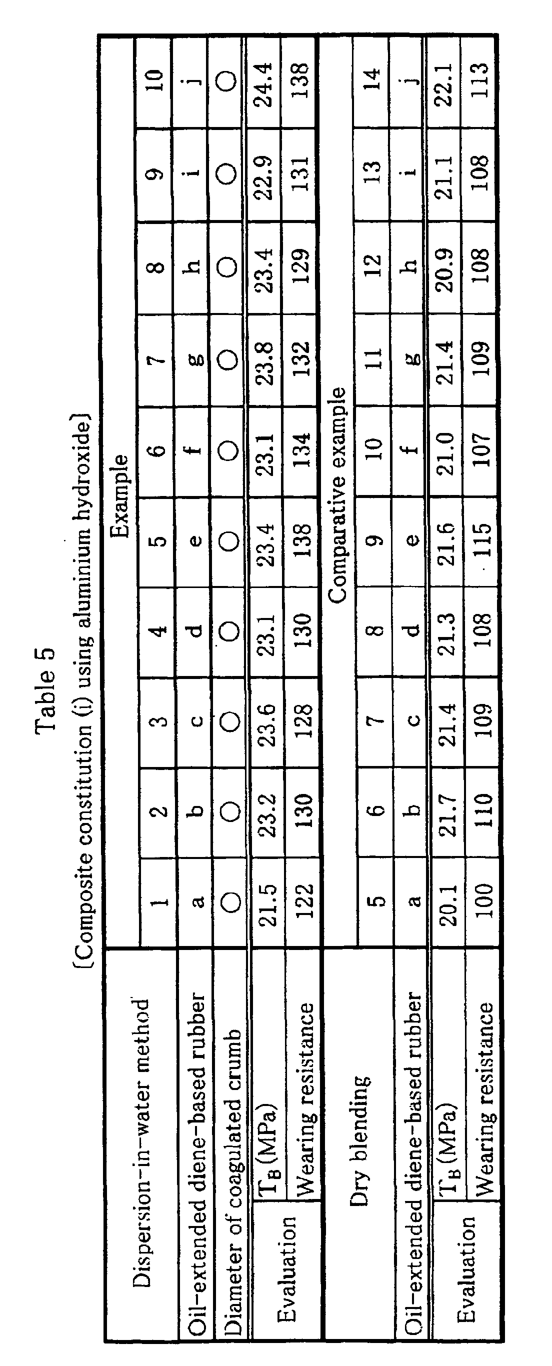

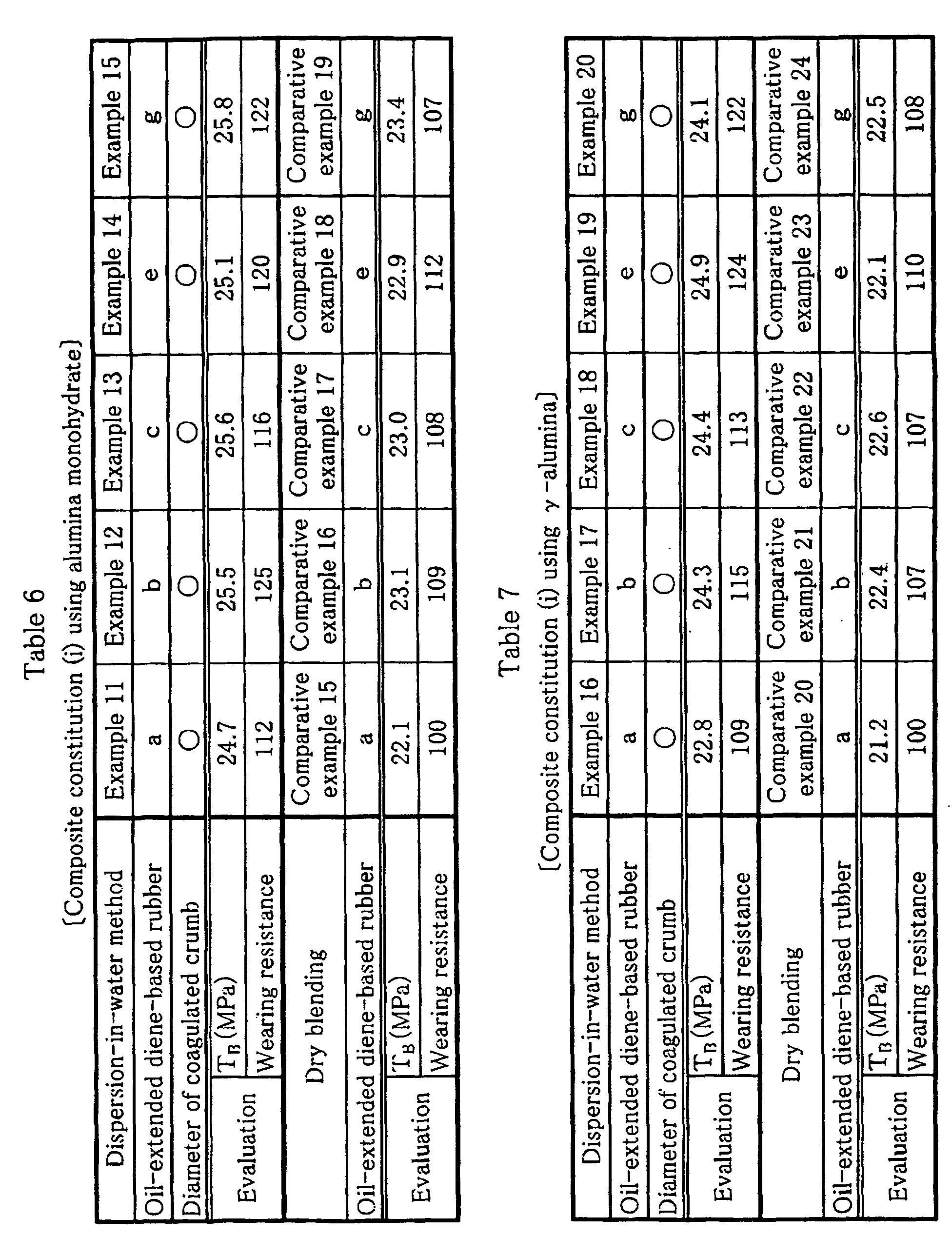

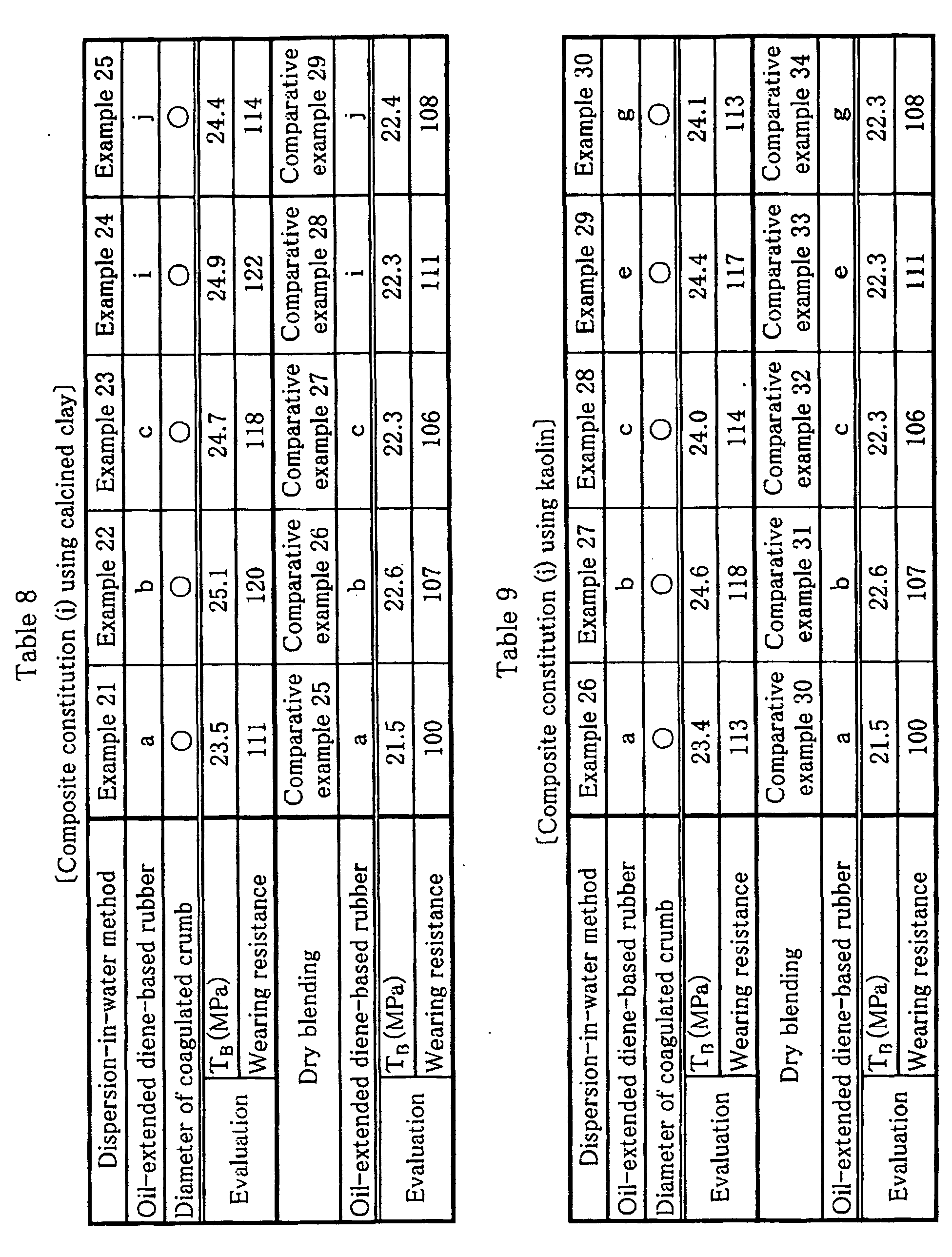

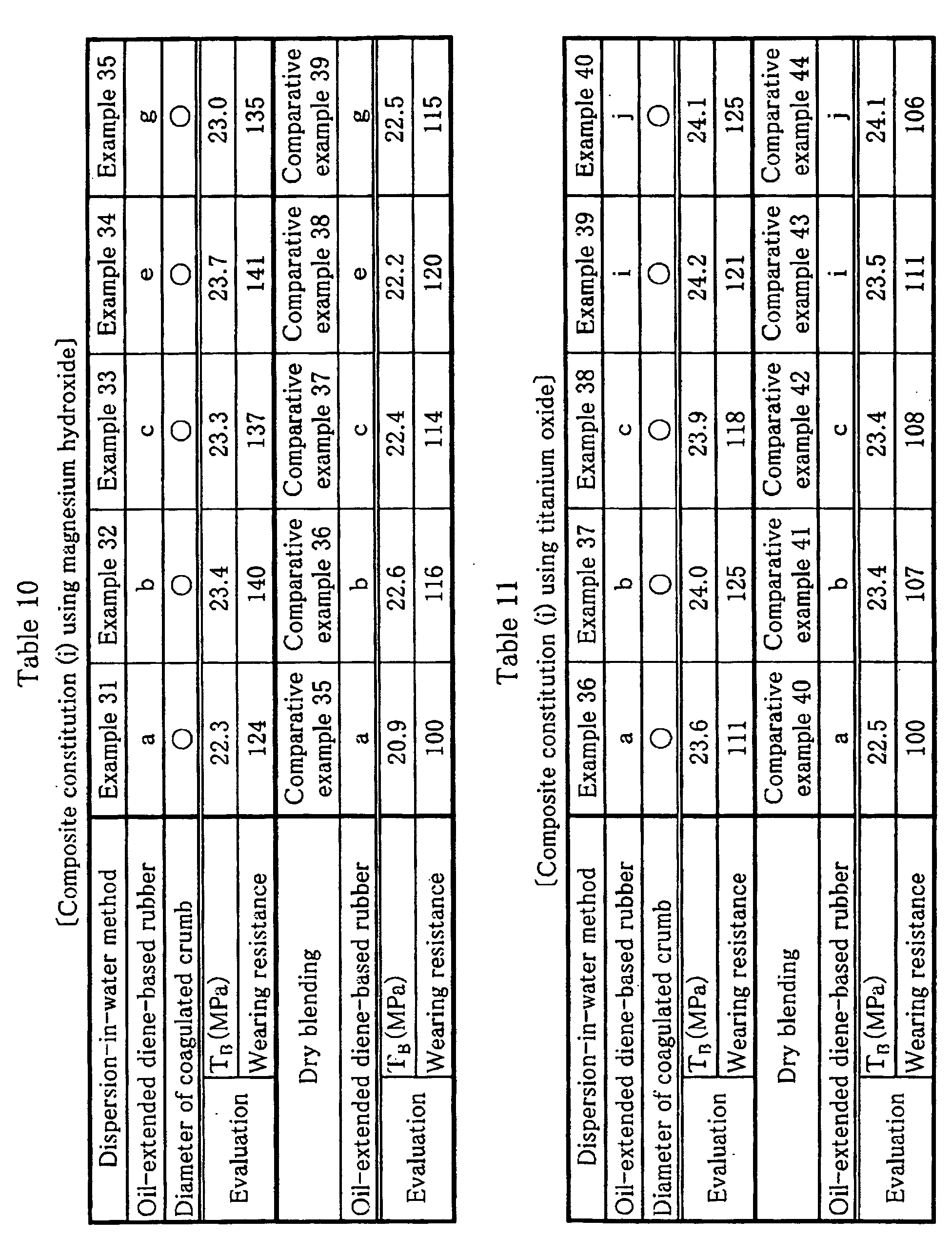

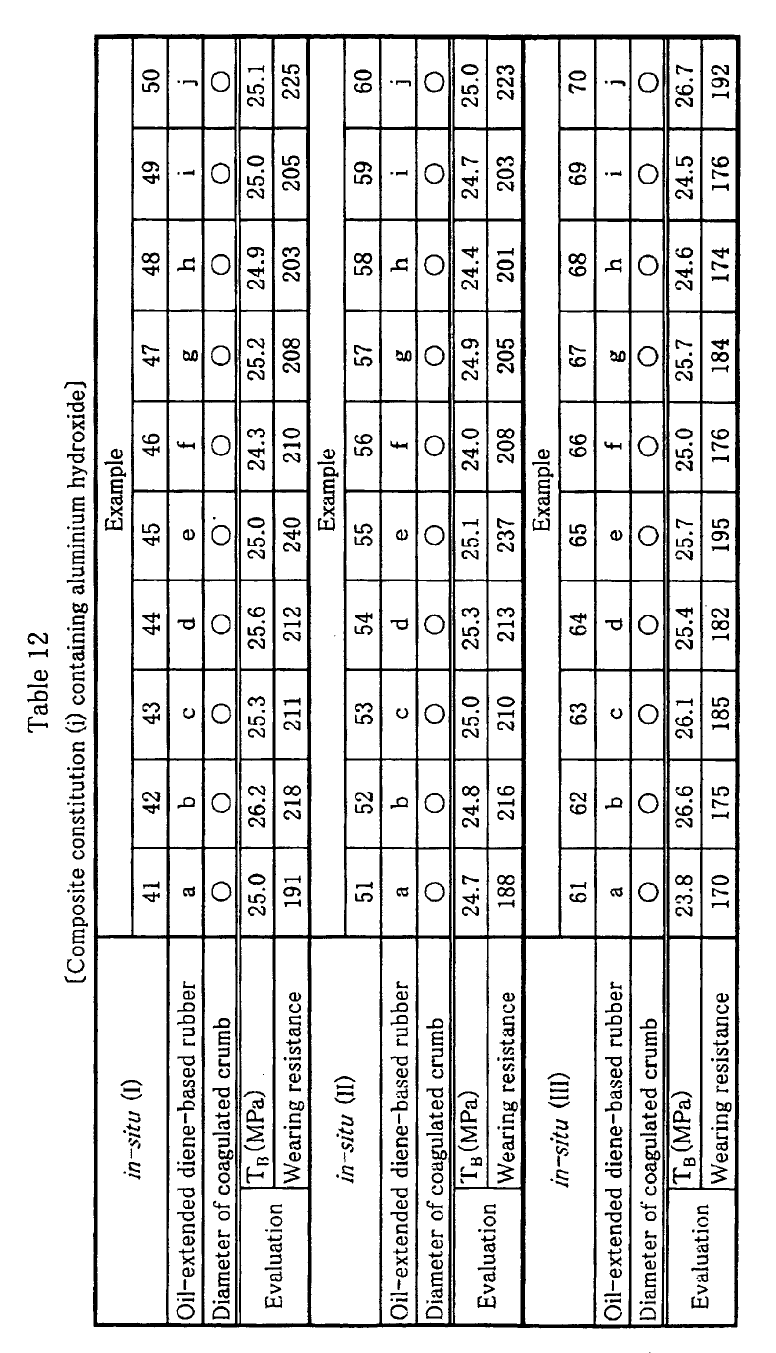

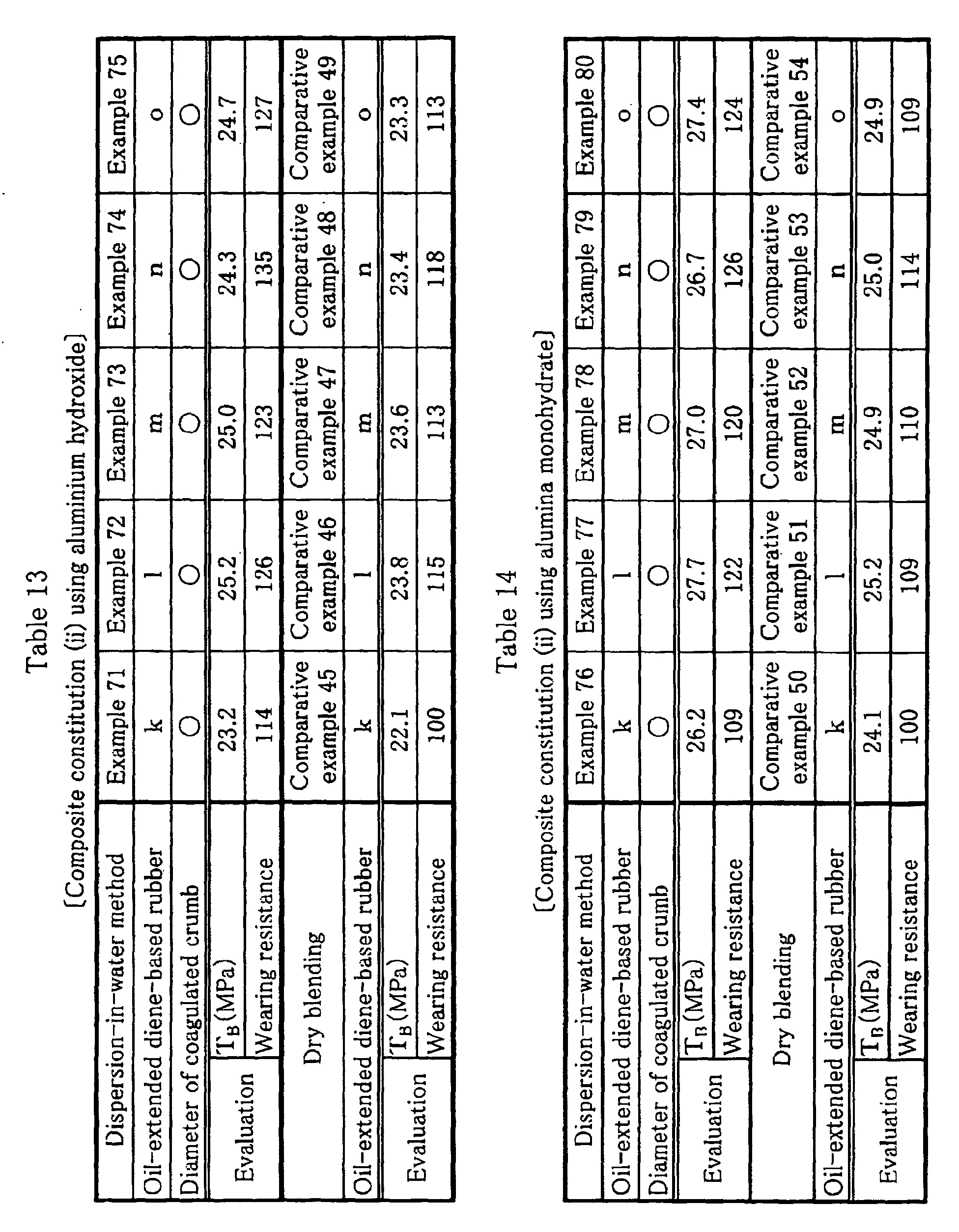

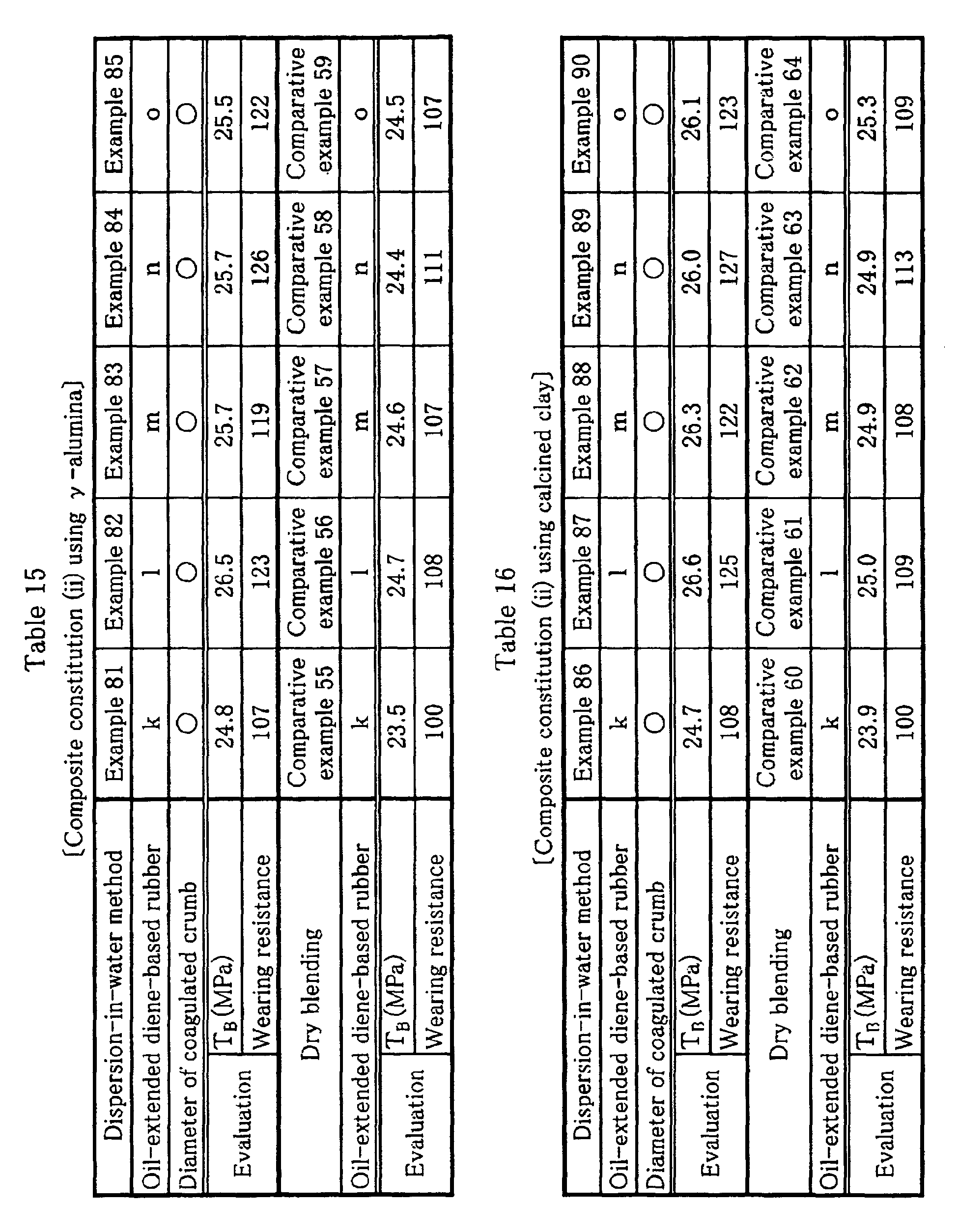

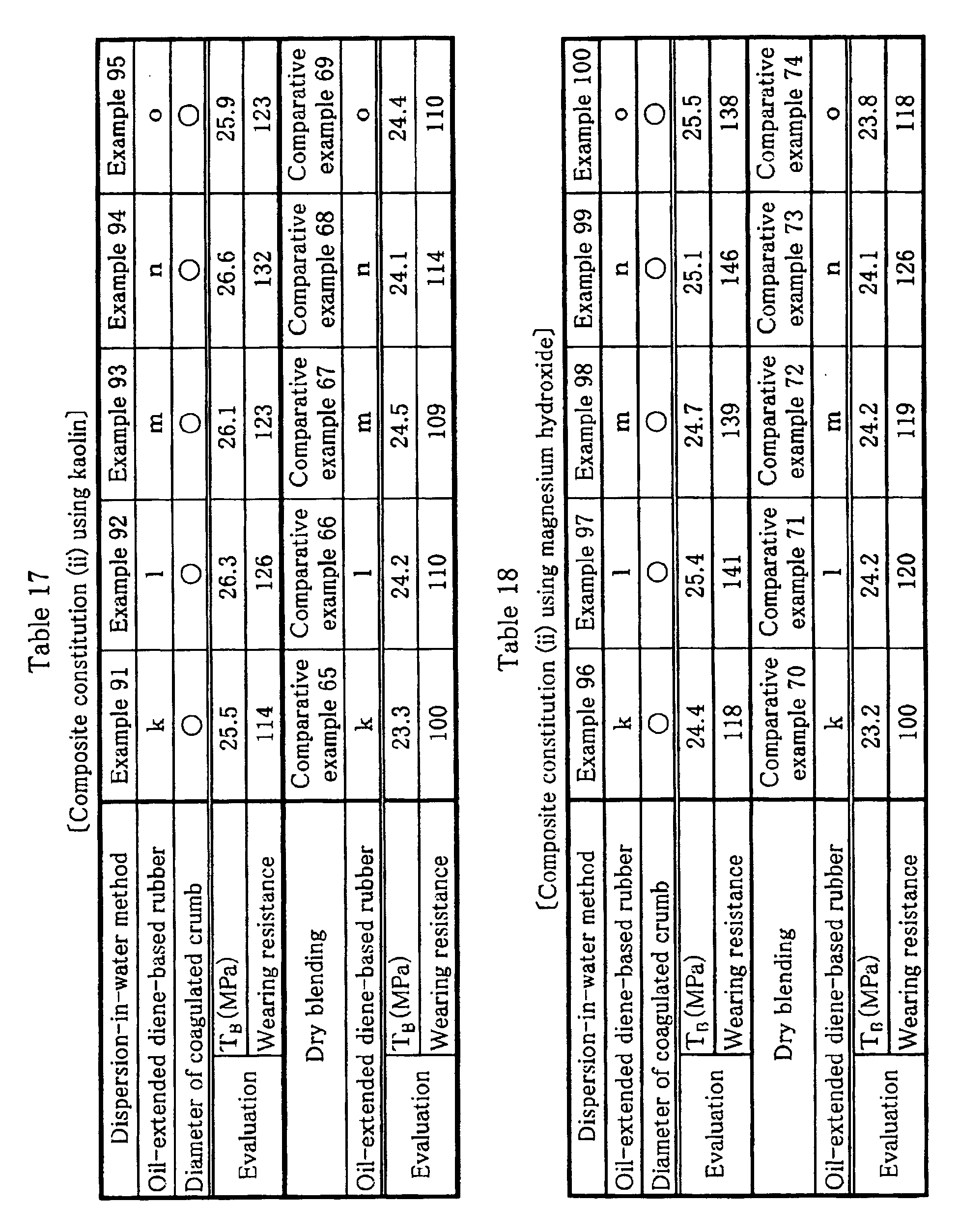

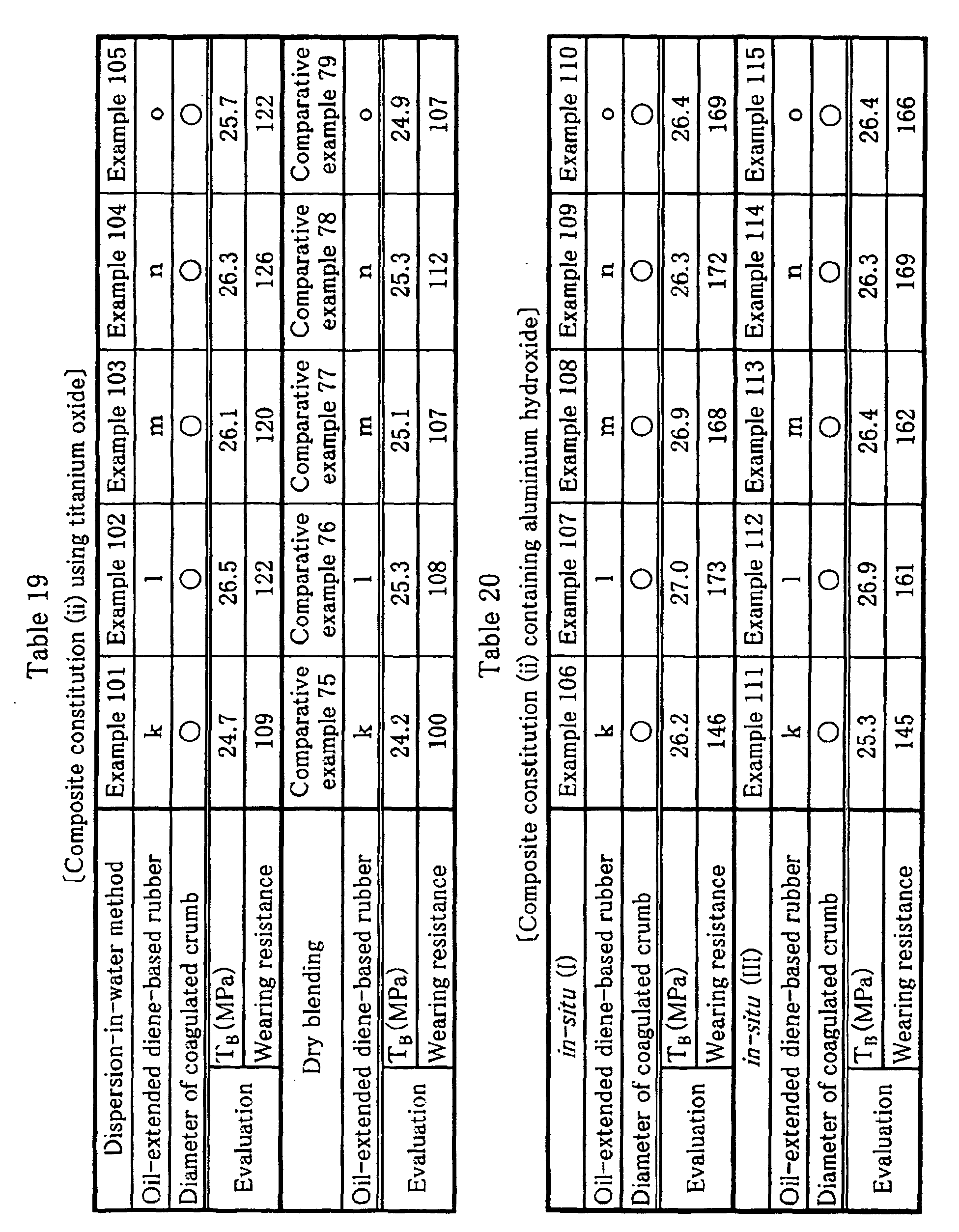

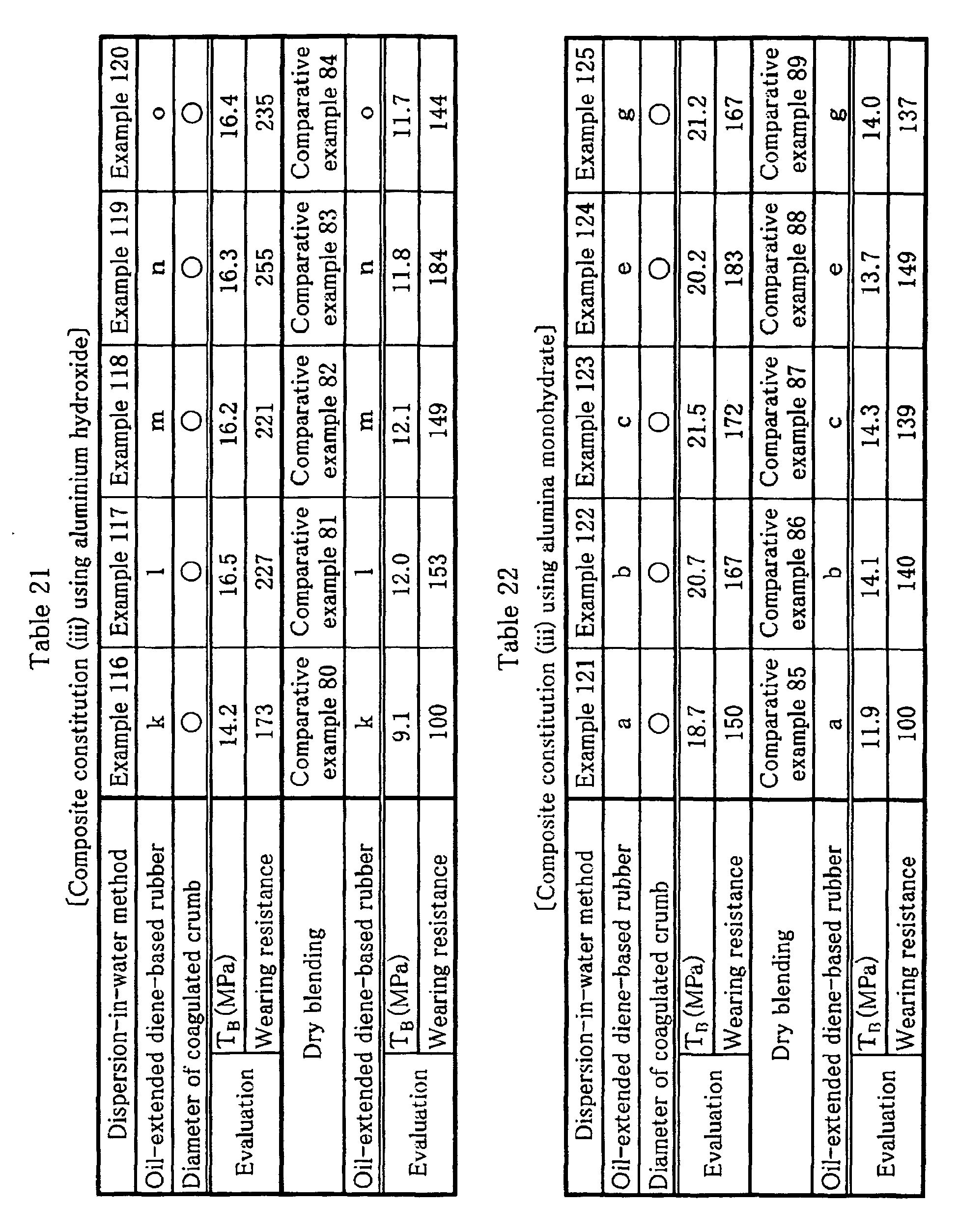

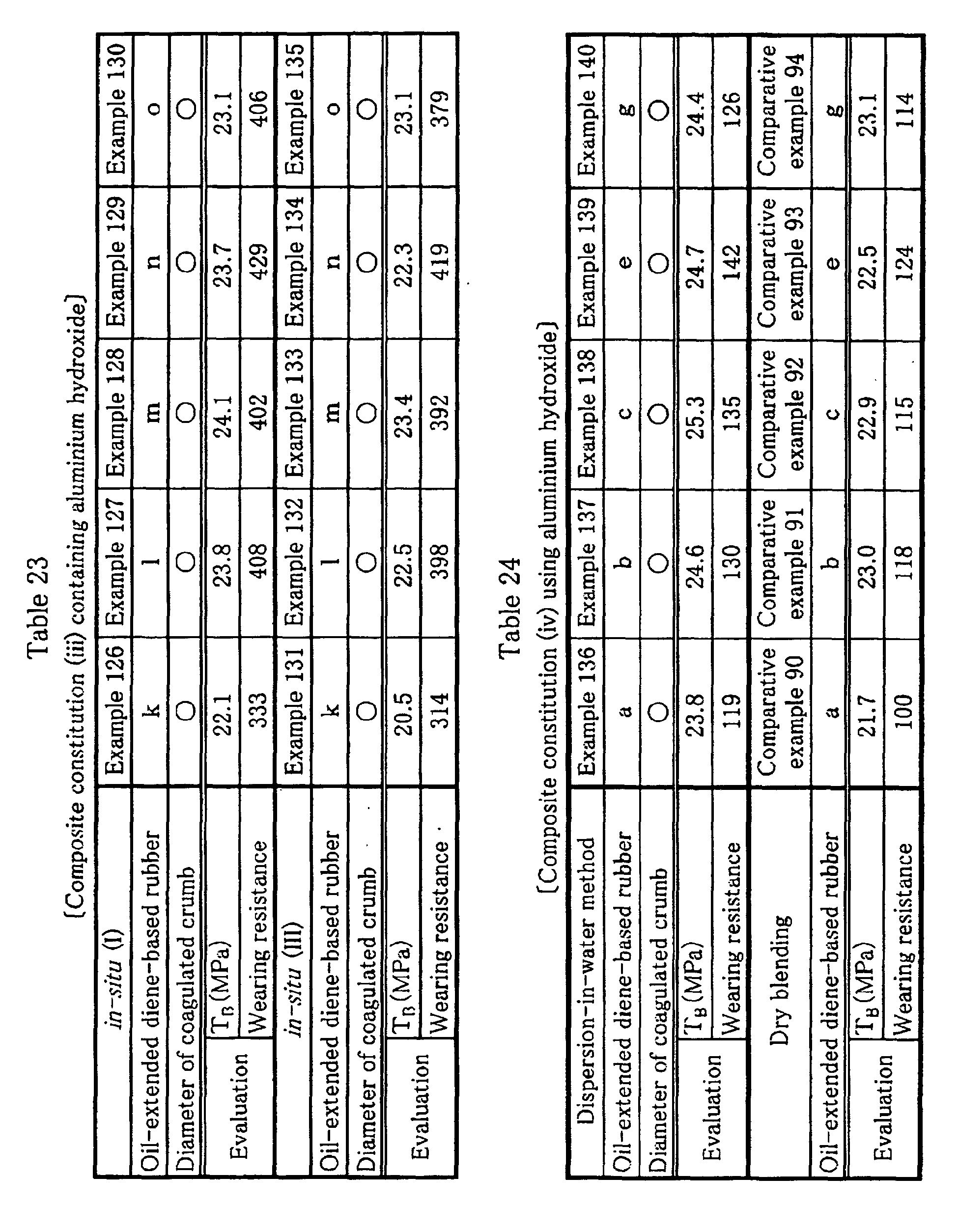

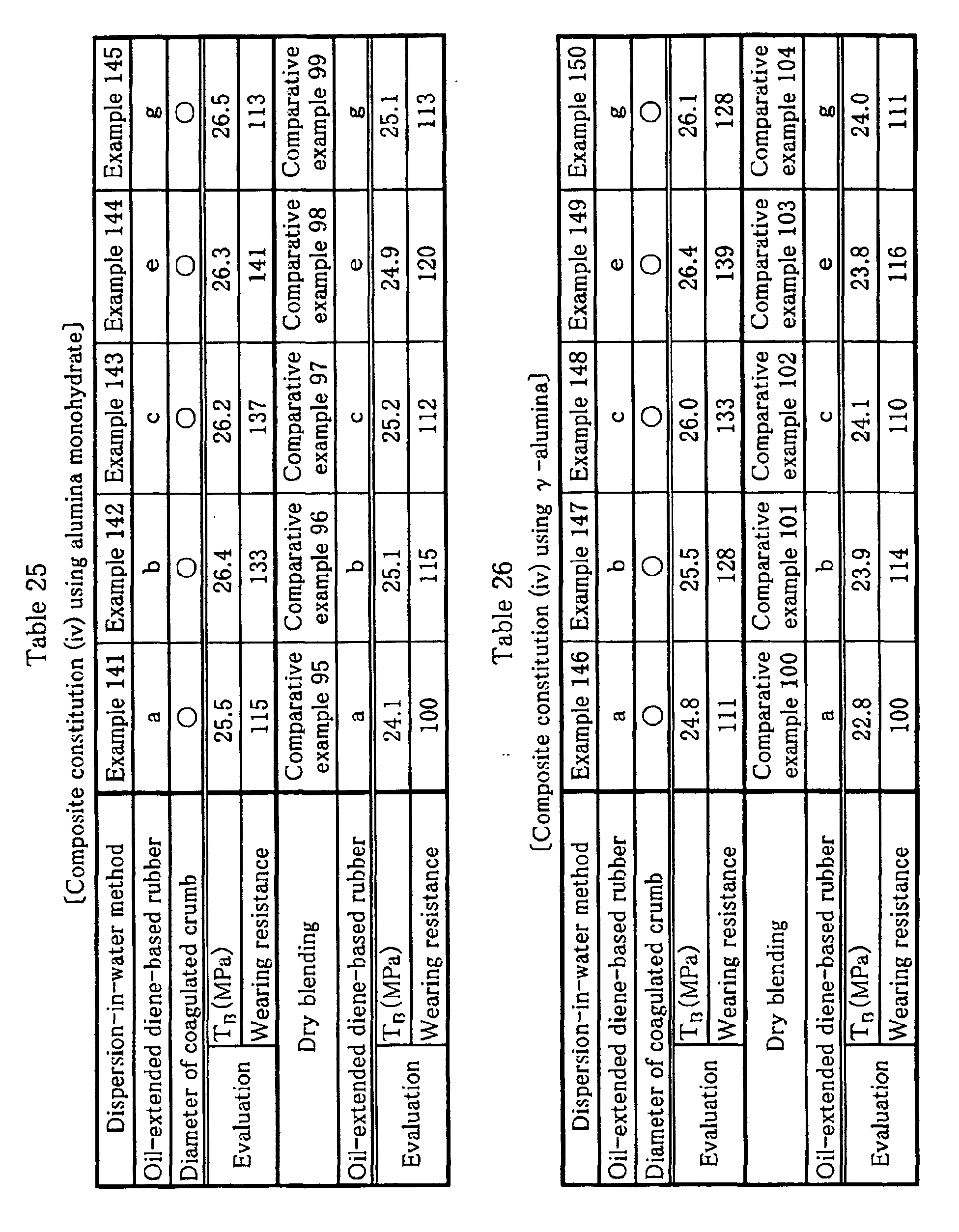

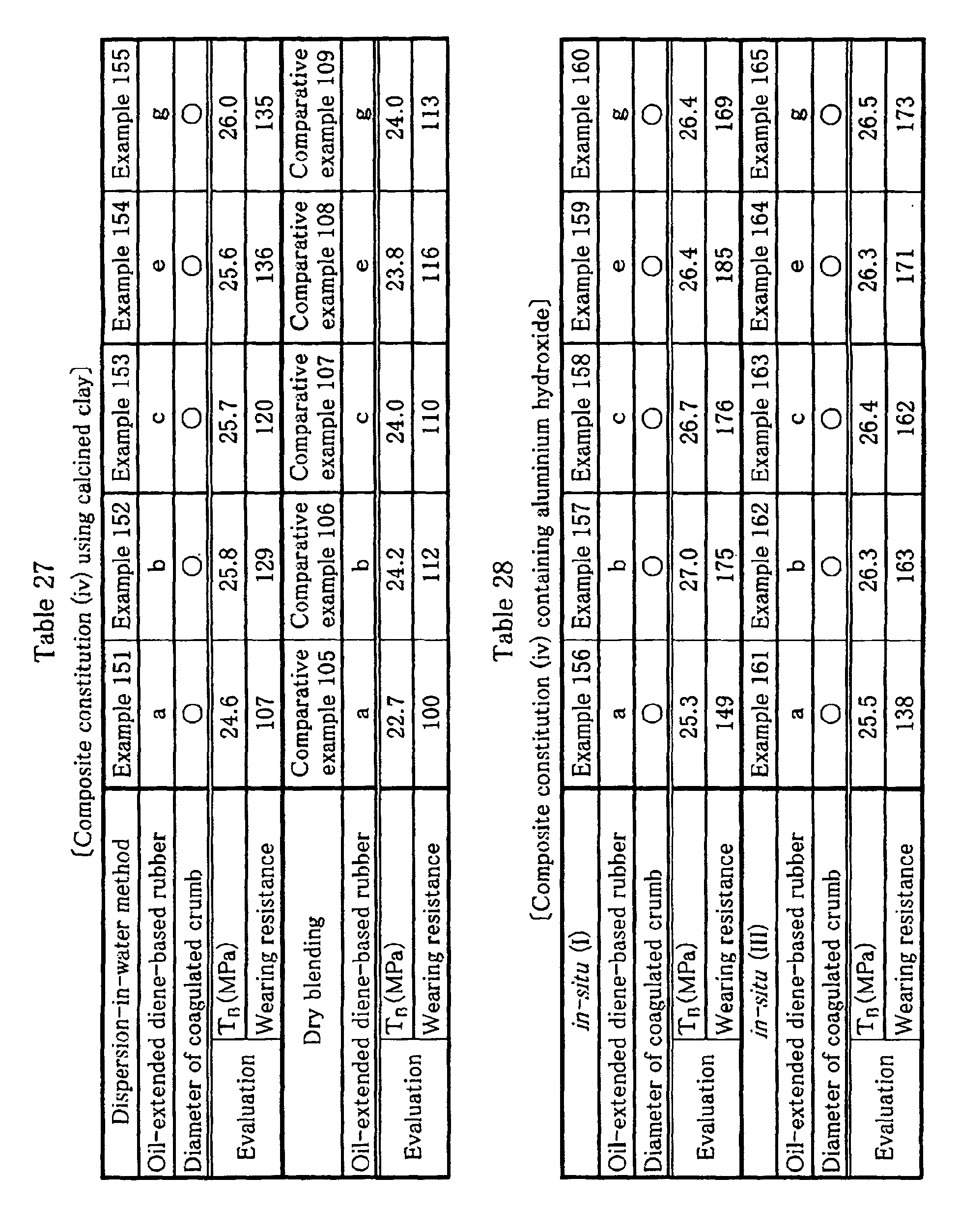

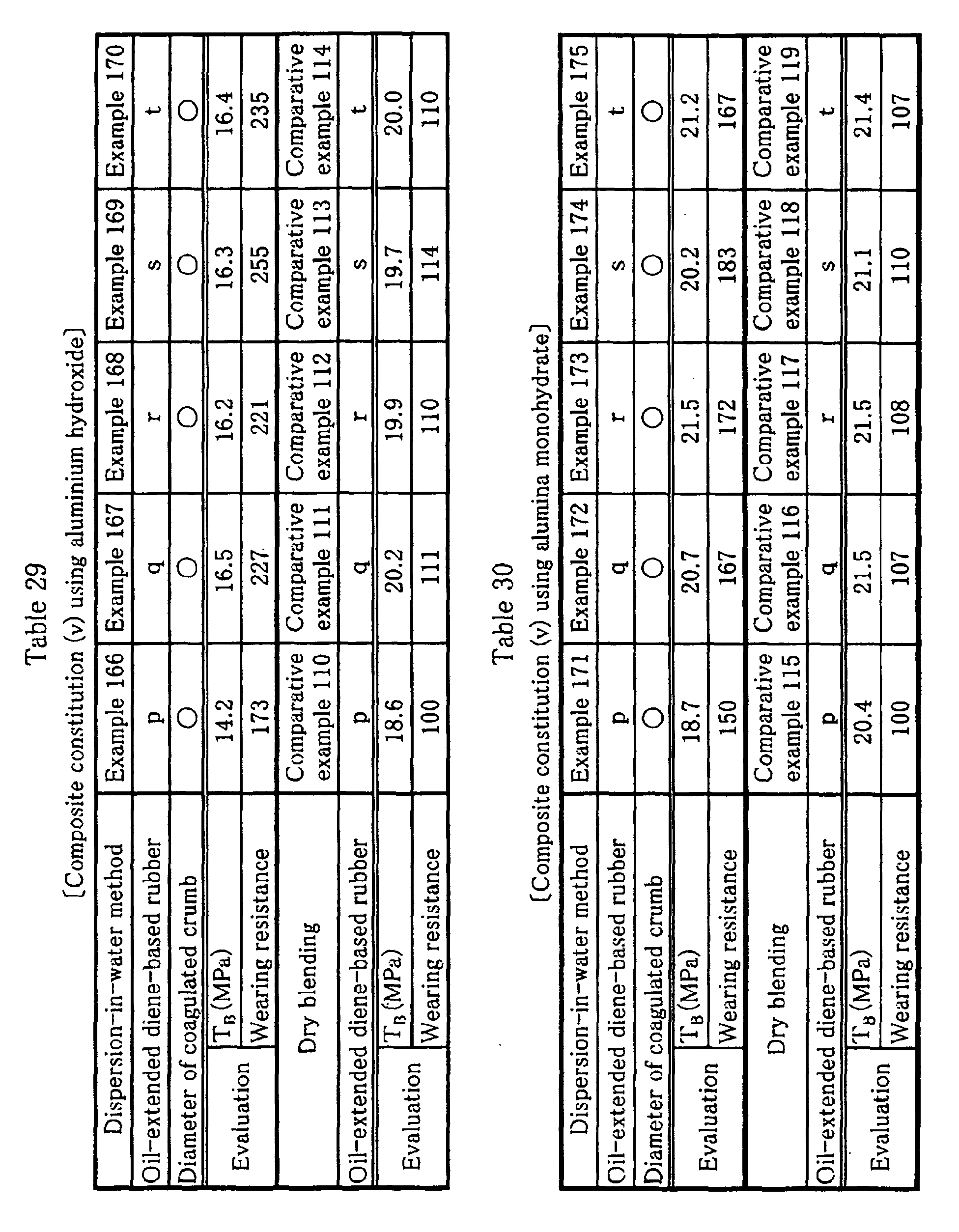

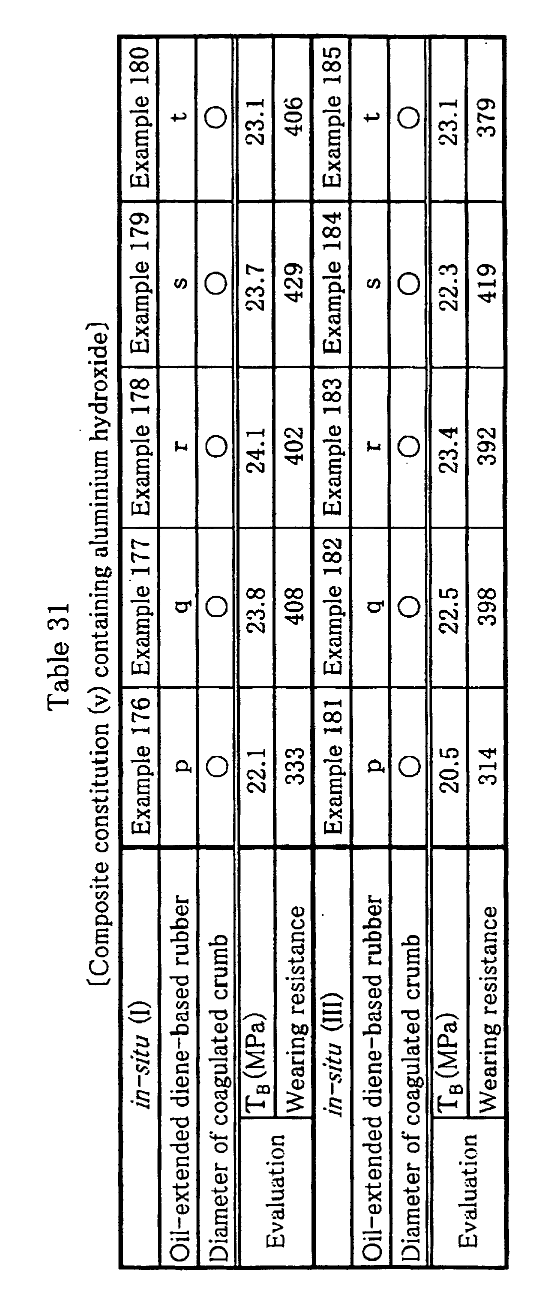

### 5. Effect of Examples 1 to 185

### 5-1. Size of the diene-based rubber-inorganic compound composite

The results from Tables 5 to 31, crumbs having high dispersibility for each kinds of inorganic compound and having an average particle diameter of 5 mm or more could be obtained both by the production process using a homogenizer and by the processes according to in-situ (I), (II) and (III).

### 5-2. Evaluation of the vulcanized rubber

Tables 32 to 34 show the results of evaluation shown in Tables 5 to 31 collectively. It can be seen from the tables that since composites having high dispersibility of the inorganic compounds are used in each of the examples compared with corresponding comparative examples, T_{B} value (tensile strength) is high and the wearing resistance is excellent.

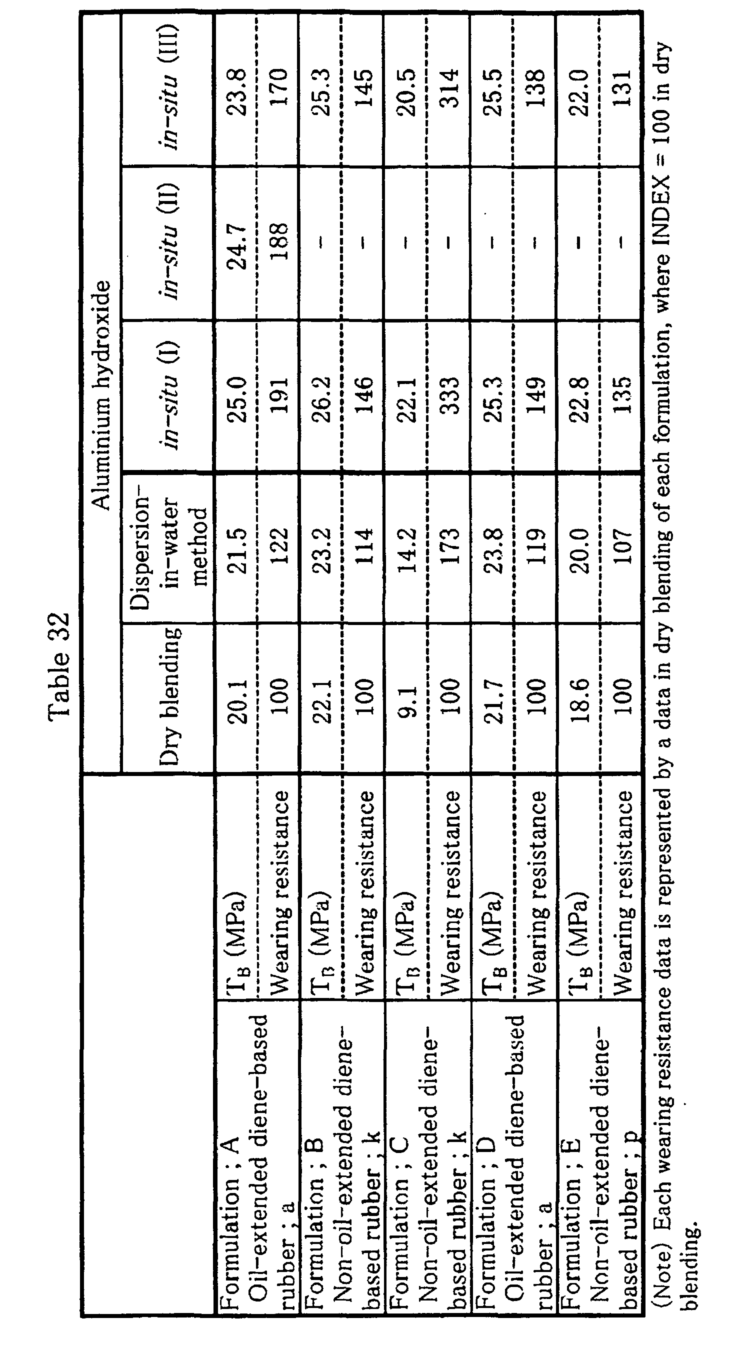

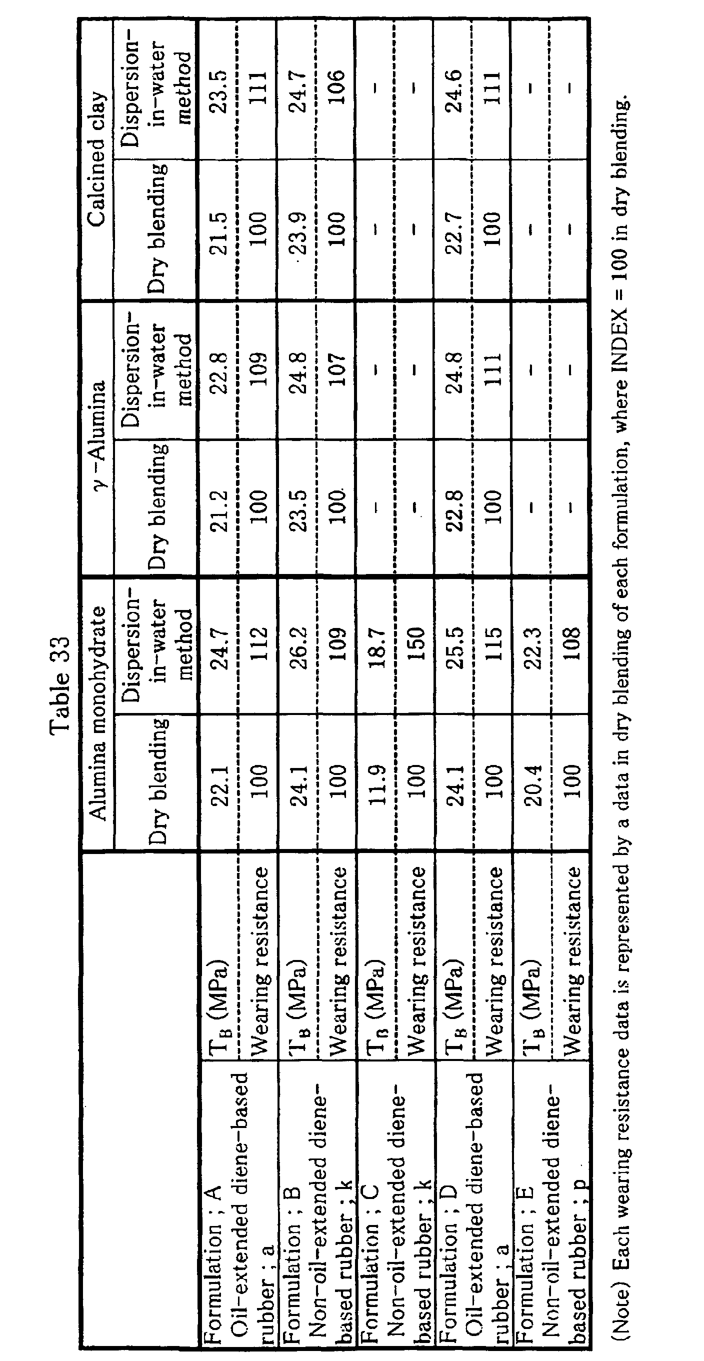

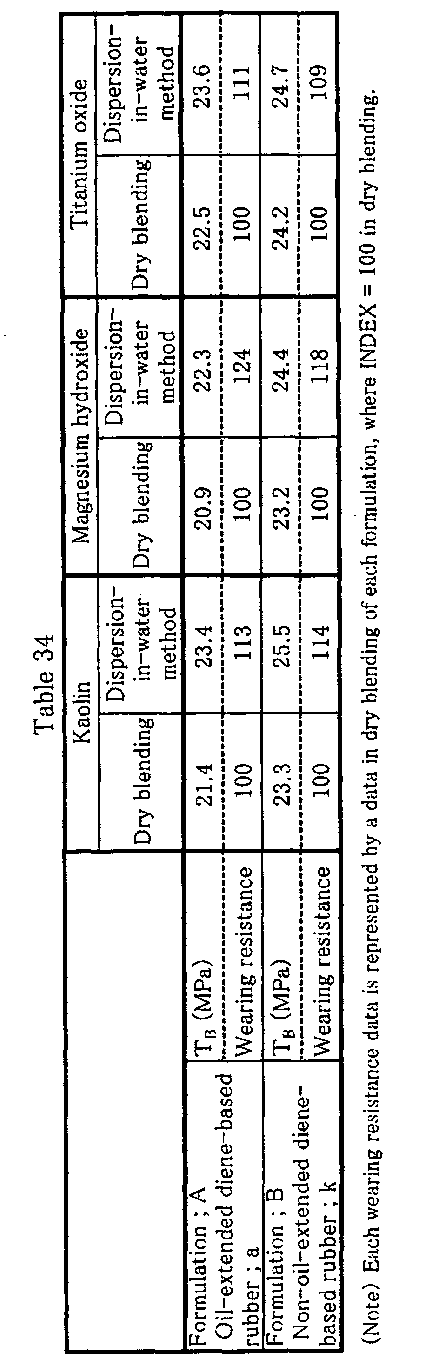

### 6. Production of diene-based rubber-aluminium hydroxide composite (II)

The oil-extended diene-based rubber a or e (Table 1) and the non-oil-extended diene-based rubber k (Table 2) obtained described above were used as the aqueous dispersion such that the content of the rubber component in each of them was 100 parts, and diene-based rubber-aluminium hydroxide composites were produced such that the content ratios for the rubber component and an aluminium hydroxide formed were in the values shown in Table 35 for the two kinds of composite constitutions (vi) and (vii) shown in Table 35. For example, in a case of (vi) in Table 35, they were controlled properly so as to produce a composite containing 30 parts of aluminium hydroxide to 137.5 parts of an oil-extended diene rubber containing 100 parts of a diene-based rubber.

**Table 35**

| | | Composite constitution | |
|---|---|---|---|
| | | (vi) | (vii) |
| Rubber component (parts by mass) | Oil-extended diene-based rubber ; a, e | 137.5* | |
| | Non-oil-extended diene-based rubber ; k | | 100 |
| Aluminium hydroxide (parts by mass) | | 30 | 20 |

| | | | |
|---|---|---|---|
| * It contains 100 parts by mass of diene-based rubber. | | | |

### 6-1. Method by in-situ (IV)

### Example 186

For the composite constitution (vi) shown in Table 35, 380 parts of 10% sulfuric acid was added to 2,570 parts of an aqueous 2.4% solution of sodium aluminate (0.9% being converted as Al₂O₃) and pH was controlled to 7, to obtain an aluminium-containing suspension comprising aluminium hydroxide as a main component. After that, 538.5 parts of an emulsified dispersion of the oil-extended diene-based rubber a (containing 100 parts of a diene-based rubber and 37.5 parts of an aromatic oil) was added to the aluminium-containing suspension, and mixed by using a stirrer to form crumbs. The mixture had pH of 7.5. Then, pH of the liquid mixture was controlled to 7 with addition of 10% sulfuric acid and coagulation was completed. The time required for controlling pH was about 3 minutes. Thus the supernatant of the resultant crumb-containing solution was clear and it confirmed that coagulation product was entirely precipitated and the diene-based rubber and aluminium hydroxide were co-coagulated.

The obtained coagulation product was separated by filtration and further washed with water and then dried by a hot blow drier to obtain an oil-extended diene-based rubber-aluminium hydroxide composite. The resultant composite was ashed and aluminium hydroxide / aluminium sulfate = 30 / 10 (phr) based on the content of the inorganic compound calculated from the ash content and the result of measurement by an X-ray micro-analyzer (XMA) (refer to Table 36).

### Example 187

An oil-extended diene-based rubber-aluminium oxide composite was produced in the same manner as Example 186 except for using oil-extended diene-based rubber e instead of the oil-extended diene-based rubber a for the composition constitution (vi) shown in Table 35 (refer to Table 36).

### Example 188

An oil-extended diene-based rubber-aluminium oxide composite was produced in the same manner as Example 186 except for using oil-extended diene-based rubber k instead of the oil-extended diene-based rubber a for the composition constitution (vii) shown in Table 35 (refer to Table 36).

### Example 189.

An oil-extended diene-based rubber-aluminium hydroxide composite of the composite constitution (vi) was produced in the same manner as Example 186 except for controlling pH of the aluminium-containing suspension to 5.5 (refer to Table 36).

### Example 190

An oil-extended diene-based rubber-aluminium hydroxide composite of the composite constitution (vi) was produced in the same manner as Example 189 except for using the oil-extended diene-based rubber e instead of the oil-extended diene-based rubber a (refer to Table 36).

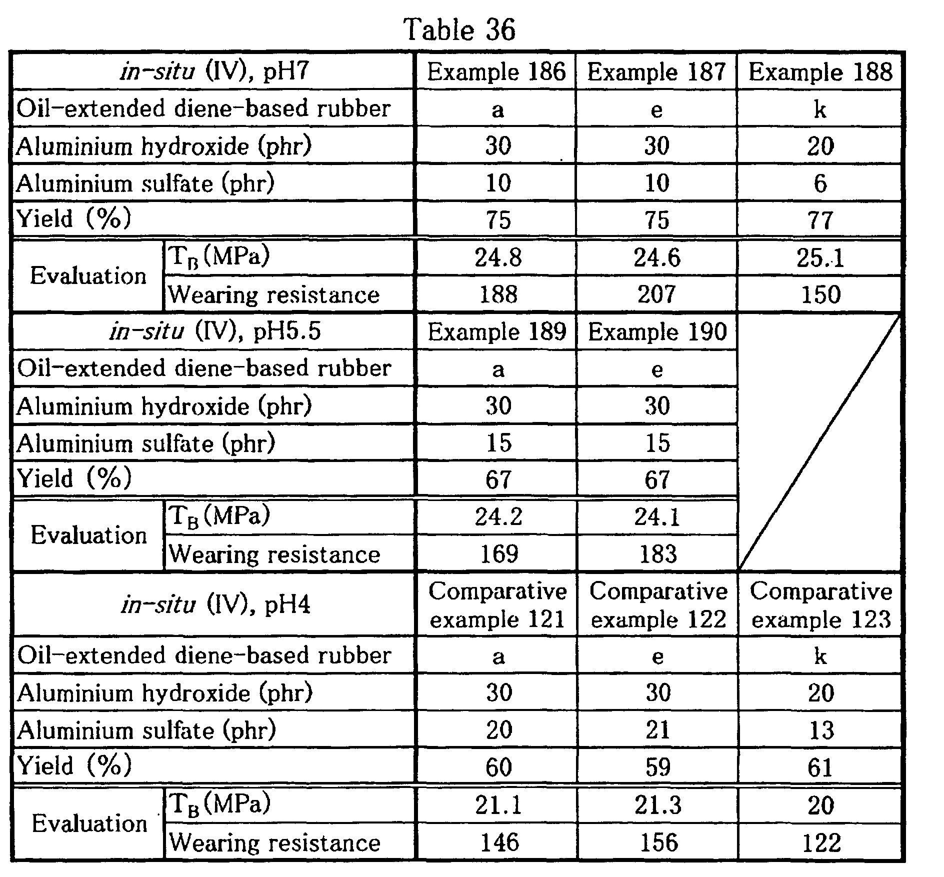

### Comparative Example 120

538.5 parts of an emulsified dispersion of an oil-extended diene-based rubber a (containing 100 parts of a diene-based rubber and 37.5 parts of an aromatic oil) was added to 2,570 parts of an aqueous 2.4% solution of sodium aluminium (0.9% being converted as Al₂O₃, pH: about 13) and mixed by using a stirrer. The mixture had pH between 12 and 13. After that, 10% sulfuric acid was added to control to pH 4 and coagulation was completed. The time required for controlling pH was about 5 minutes. A large amount of suspended solids (diene-based rubber) were present in the resultant product and coagulation product was inhomogeneous.

### Comparative Example 121

Coagulation was conducted in the same manner as Comparative Example 120 except for changing the addition time for 10% sulfuric acid to 20 minutes. In this case, most of coagulation products were precipitated although suspended solids of the diene-based rubber were slightly observed. Further, aluminium hydroxide / aluminium sulfate = 30 / 20 (phr) was obtained in the same manner as in Example 186 (refer to Table 36).

### Comparative Example 122 and Comparative Example 123

An oil-extended diene-based rubber-aluminium hydroxide composite or non-oil-extended diene-based rubber-aluminium hydroxide composite was produced in the same manner as Comparative Example 121 except for using the oil-extended diene-based rubber e or non-oil-extended diene-based rubber k instead of the oil-extended diene-based rubber a (refer to Table 36).

### 6-2. Method by in-situ (V)

### Example 191

For the composite constitution (vi) shown in Table 35, 380 parts of 10% sulfuric acid was added to 2,570 parts of an aqueous 2.4% solution of sodium aluminate (0.9% being converted as Al₂O₃) and pH was controlled to 7, to obtain an aluminium-containing suspension comprising aluminium hydroxide as a main component. After that, a prescribed amount of 30% of 538.5 parts of an emulsified dispersion of the oil-extended diene-based rubber a which is containing 100 parts of the diene-based rubber and 37.5 parts of an aromatic oil, (that is corresponding to 143 parts of the diene-based rubber having solid concentration of 21% and 11.3 parts of the aromatic oil), and the above aluminium-containing suspension were mixed while stirring to form crumbs. Then, the emulsified dispersion in an amount corresponding to the remaining 70% was added and mixed to form crumbs further. The liquid mixture had pH of 7.7. And pH of the liquid mixture was controlled to 7 with addition of 10% sulfuric acid and coagulation was completed. The time required for controlling pH was about 3 minutes. Thus the supernatant of the resultant crumb-containing solution was clear and it confirmed that a coagulation product was entirely precipitated and the diene-based rubber and aluminium hydroxide were co-coagulated.

The obtained coagulation product was separated by filtration and further washed with water and then dried by a hot blow drier to obtain an oil-extended diene-based rubber-aluminium hydroxide composite. The resultant composite was ashed and aluminium hydroxide / aluminium sulfate = 30 / 10 (phr) in the same manner as Example 186 (refer to Table 37).

### Comparative Example 124

A prescribed amount of 30% of 538.5 parts of an emulsified dispersion of the oil-extended diene-based rubber a which is containing 100 parts of the diene-based rubber and 37.5 parts of an aromatic oil, (that is corresponding to 30 parts of the diene-based rubber and 11.3 parts of the aromatic oil) was added and mixed to 2,570 parts of an aqueous 2.4% solution of sodium aluminate (0.9% being converted as Al₂O₃) to form crumbs. After that, the emulsified dispersion in an amount corresponding to the remaining 70% was added and mixed to form crumbs further. The mixture had pH of 12. And pH of the liquid mixture was controlled to 4 with addition of 10% sulfuric acid and coagulation was completed. The time required for controlling pH was about 5 minutes. A large amount of suspended solids (diene-based rubber) were present in the resultant product and the coagulation product was inhomogeneous.

### Comparative Example 125

Coagulation was conducted in the same manner as Comparative Example 124 except for changing the addition time of 10% sulfuric acid to 20 minutes. In this case, most of coagulation products were precipitated although suspended solids of diene-based rubber were slightly observed. Further, aluminium hydroxide / aluminium sulfate = 30 / 21 (phr) was obtained in the same manner as in described above (refer to Table 37).

**Table 37**

| *in-situ* (V), pH7 | | Example 191 |
|---|---|---|
| Oil-extended diene-based rubber | | a |
| Aluminium hydroxide (phr) | | 30 |
| Aluminium sulfate (phr) | | 10 |
| Yield (%) | | 75 |
| Evaluation | T_{B}(MPa) | 24.5 |
| | Wearing resistance | 187 |

| *in-situ* (V), pH4 | | Comparative example 125 |
|---|---|---|
| Oil-extended diene-based rubber | | a |
| Aluminium hydroxide (phr) | | 30 |
| Aluminium sulfate (phr) | | 21 |
| Yield (%) | | 59 |
| Evaluation | T_{B}(MPa) | 22.4 |
| | Wearing resistance | 144 |

### 6-3. Method by in-situ (VI)

### Example 192

For the composite constitution (vi) shown in Table 35, 500 parts of 10% sulfuric acid was added to an aqueous solution controlled to pH 14 with addition of 95 parts sodium hydroxide to 2,660 parts of an aqueous 3.0% solution of aluminium sulfate (Al₂O₃ conversion = 0.9%) and pH was controlled to 7, to obtain an aluminium-containing suspension comprising aluminium hydroxide as a main component. After that, 538.5 parts of an emulsified dispersion liquid of the oil-extended diene-based rubber a (containing 100 parts of a diene-based rubber and 37.5 parts of an aromatic oil) were added to the aluminium-containing suspension, and mixed by using a stirrer to form crumbs. The pH for the liquid mixture was 7.7. Then, pH of the liquid mixture was controlled to 7 with addition of 10% sulfuric acid and coagulation was completed. The time required for controlling pH was about 3 minutes. The supernatant of the resultant crumb-containing solution was clear and it confirmed that coagulation product was entirely precipitated and the diene-based rubber and the aluminium hydroxide were co-coagulated.

The obtained coagulation product was separated by filtration and further washed with water and then dried by a hot blow drier to obtain an oil-extended diene-based rubber-aluminium hydroxide composite. In the same manner as Example 186, aluminium hydroxide / aluminium sulfate = 30 / 13 (phr) was obtained (refer to Table 38).

### Comparative Example 126

538.5 parts of an emulsified dispersion liquid of an oil-extended diene-based rubber a (containing 100 parts of a diene-based rubber and 37.5 parts of an aromatic oil) were added to an aqueous solution prepared by adding 95 parts of sodium hydroxide to 2,660 parts of an aqueous 3.0% solution of aluminium sulfate (Al₂O₃ conversion = 0.9%) and controlled to pH 14 and mixed by using a stirrer. The liquid mixture had pH between 12 and 13. After that, 10% sulfuric acid was added to control pH to 4 and coagulation was completed. The time required for controlling pH was about 5 minutes. A large amount of suspended solids considered to be diene-based rubber were present in the resultant product and were inhomogeneous.

### Comparative Example 127

Coagulation was conducted in the same manner as Comparative Example 126 except for changing the addition time of 10% sulfuric acid to 20 minutes. In this case, most of coagulation products were precipitated although suspended solids of diene-based rubber were slightly observed. Further, aluminium hydroxide / aluminium sulfate = 30 / 25 (phr) was obtained in the same manner as described above (refer to Table 38).

**Table 38**

| *in-situ* (VI), pH7 | | Example 192 |
|---|---|---|
| Oil-extended diene-based rubber | | a |
| Aluminium hydroxide (phr) | | 30 |
| Aluminium sulfate (phr) | | 13 |
| Yield (%) | | 70 |
| Evaluation | T_{B}(MPa) | 24.1 |
| | Wearing resistance | 178 |

| *in-situ* (VI), pH4 | | Comparative example 127 |
|---|---|---|
| Oil-extended diene-based rubber | | a |
| Aluminium hydroxide (phr) | | 30 |
| Aluminium sulfate (phr) | | 25 |
| Yield (%) | | 55 |
| Evaluation | T_{B}(MPa) | 21.3 |
| | Wearing resistance | 132 |

### 7. Preparation of rubber composition

Rubber compositions were prepared by using composites produced in Examples 186 to 192 and Comparative Examples 121 to 123, 125 and 127 described above and ingredients described above, and kneading above two stages in accordance with formulations A and B in Table 4. In this rubber compositions, "inorganic compound" in Table 4 means aluminium hydroxide contained in the composites.

### Comparative Examples 128 to 130

Rubber compositions were prepared by using oil-extended diene-based rubbers a and e or non-oil-extended diene-based rubber k, and commercially available aluminium hydroxide powder (trade name; "HIGILITE H-43M" manufactured by Showa Denko K. K., average particle diameter; 0.6 µm) by dry blending in accordance with the formulation in Table 4.

### 8. Evaluation of performance

The rubber compositions obtained as described above were evaluated in the same manner as in 4 above and the results were shown in Tables 36 to 39.

**Table 39**

| Dry blending | | Comparative example 128 | Comparative example 129 | Comparative example 130 |
|---|---|---|---|---|
| Oil-extended diene-based rubber | | a | e | k |
| Aluminium hydroxide (phr) | | 30 | 30 | 20 |
| Aluminium sulfate (phr) | | - | - | - |
| Evaluation | T_{B}(MPa) | 20.1 | 21.6 | 22.1 |
| | Wearing resistance | 100 | 100 | 100 |

### 9. Effect of Examples 186 to 192

### 9-1. Content of aluminium hydroxide

As the results from Table 36, Comparative Example 121 and Comparative Example 122 using an aluminium-containing solution controlled to pH 4 had amounts of formed aluminium sulfate as much as 20 to 21 parts in both relative to 30 parts of aluminium hydroxide, respectively and yields were about 60% in the production according to in-situ (IV) by using an oil-extended diene-based rubber. In addition, in Example 189 and Example 190 using an aluminium-containing suspension controlled to pH 5.5, amount of formed aluminium sulfate were 15 parts in both relative to 30 parts of aluminium hydroxide which were slightly improved. On the other hand, in Example 186 and Example 187 using an aluminium-containing solution controlled to pH 7, purities of aluminium hydroxide were improved and the amounts of formed aluminium sulfate were as less as 10 parts in both based on 30 parts of aluminium hydroxide.

Additionally, also in a case of using a non-oil-extended diene-based rubber, while an aluminium-containing solution controlled to pH 4 was used and the yield was as low as 61% in Comparative Example 123, it was increased up to 77% in Example 188 controlled to pH 7.

As the results from Table 37, Comparative Example 125 using an aluminium-containing solution controlled to pH 4 had an amount of formed aluminium sulfate as much as 21 parts relative to 30 parts of aluminium hydroxide according to in-situ (V). On the other hand, in Example 191 using an aluminium-containing solution controlled to pH 7, the amount of formed aluminium sulfate was as less as 10 parts and the content of aluminium hydroxide was improved. In addition, as the results from Table 38, Comparative Example 127 using an aluminium-containing solution controlled to pH 4 had an amount of formed aluminium sulfate as much as 25 parts based on 30 parts of aluminium hydroxide in the production according to in-situ (VI). On the other hand, in Example 192 using an aluminium-containing solution controlled to pH 7, an amount of formed aluminium sulfate was as less as 13 parts and the content of aluminium hydroxide was improved.

### 9-2. Evaluation of the vulcanized rubber

Table 40 summarizes the results of evaluation in Tables 36 to 39. The result of Table 40 shows that since the amount of aluminium sulfate as an impurity was low, T_{B} value (tensile strength) was high and wearing resistance was excellent in each of the Examples compared with corresponding Comparative Examples. For example, the vulcanized rubber obtained from the rubber composition prepared in accordance with the formulation A in Table 4 by using the oil-extended diene-based rubber a obtained in the production according to in-situ (IV), T_{B} was increased as 21.1 -> 24.2 -> 24.8 MPa as pH increased higher and, at the same time, the wearing resistance was also improved as 146 -> 169 -> 188 (index based on 100 for dry blend data). Similar trend was also confirmed for other examples.

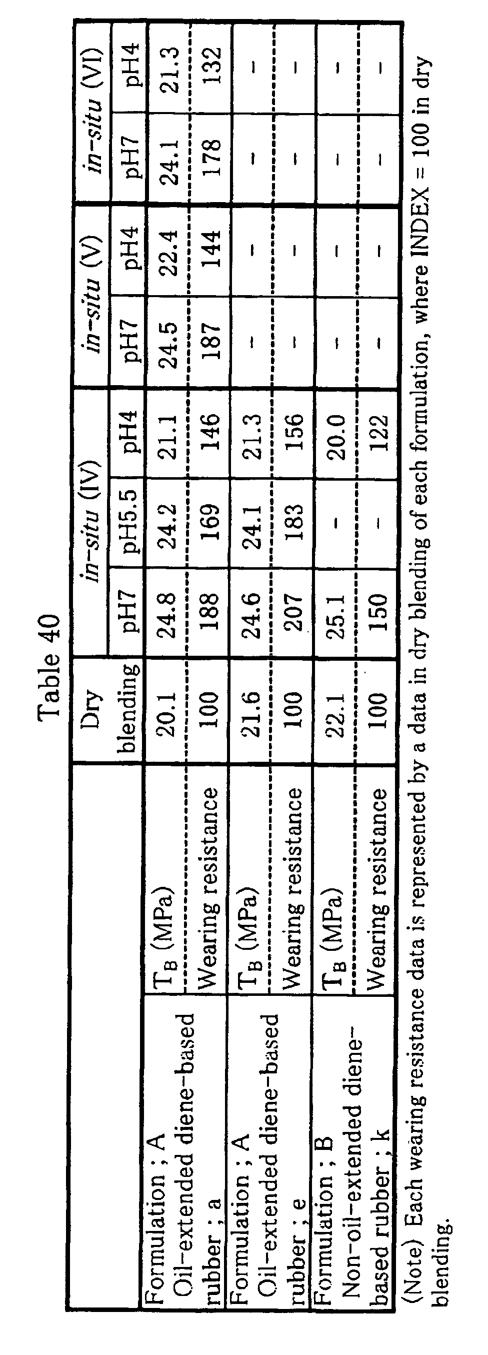

### EFFECT OF THE INVENTION

According to the present invention, a diene-based rubber-inorganic compound composite having high dispersibility of the inorganic compound can be produced at high productivity. Since the size of the crumb diameter of the composite obtained by the coagulation step is as large as 5 mm or more, the operation efficiency during production of the diene-based rubber-inorganic compound composite is further improved. In addition, the use of the obtained diene-based rubber-inorganic compound composite according to the production process of the present invention leads to a rubber composition for providing a rubber product having excellent characteristics such as wearing resistance.

Further, according to another invention, a diene-based rubber-inorganic compound composite in which aluminium oxide is dispersed at high content and homogeneously can be produced at high productivity. Controlling of pH of the aluminium-containing suspension in a range between 5.1 and 8.4 (weakly acidic - neutral - weakly alkaline property) can provide excellent operation efficiency and safety, lower an amount of impurities such as aluminium sulfate (Al₂(SO₄)₃) to be formed and can form aluminium hydroxide at high content.

### INDUSTRIAL APPLICABILITY

The diene-based rubber-inorganic compound composite obtained by the present invention is utilized as a raw material for a rubber for a tire such as a tire tread, as well as various kinds of rubber products such as a belt, a rubber roll and a hose.

## Claims

1. A process for producing a diene-based rubber-inorganic compound composite comprising a diene-based rubber and an inorganic compound represented by the following general formula (I), comprising
a step of mixing an inorganic compound and/or a material capable of forming said inorganic compound, an anionic compound and a dispersion liquid of a diene-based rubber:
wM · xSiO_{y} · zH₂O (I)
wherein M is at least one metal element selected from the group consisting of Al, Mg, Ti and Ca, metal oxide thereof or metal hydroxide thereof, and w, x, y, and z are an integer of from 1 to 5, an integer of from 0 to 10, an integer of from 2 to 5, and an integer of from 0 to 10, respectively.

2. The process for producing a diene-based rubber-inorganic compound composite according to Claim 1, wherein said material capable forming said inorganic compound is at least one material selected from the group consisting of metal salts, oxoacid salts of metals and organic metal compounds.

3. The process for producing a diene-based rubber-inorganic compound composite according to Claim 1, wherein said anionic compound is a compound having a carboxyl group.

4. The process for producing a diene-based rubber-inorganic compound composite according to Claim 3, wherein said compound having a carboxyl group is at least one compound selected from the group consisting of a rosinate and a salt of a fatty acid.

5. The process for producing a diene-based rubber-inorganic compound composite according to Claim 1, wherein said dispersion liquid of said diene-based rubber is a diene-based rubber latex synthesized by emulsion polymerization.

6. The process for producing a diene-based rubber-inorganic compound composite according to Claim 1, comprising a step of co-coagulating said diene-based rubber and said inorganic compound from said liquid mixture obtained in said mixing step by using an electrolyte comprising a metal salt, a step of separating a coagulation product by filtration, and a step of drying said coagulation product.

7. The process for producing a diene-based rubber-inorganic compound composite according to Claim 1, wherein said diene-based rubber is a diene-based rubber having a polar group.

8. The process for producing a diene-based rubber-inorganic compound composite according to Claim 7, wherein said polar group is at least one kind of group selected from the group consisting of hydroxyl group, oxy group, alkoxysilyl group, epoxy group, carboxyl group, carbonyl group, oxycarbonyl group, sulfide group, disulfide group, sulfonyl group, sulfinyl group, thiocarbonyl group, imino group, amino group, nitrile group, ammonium group, imide group, amide group, hydrazo group, azo group and diazo group.

9. The process for producing a diene-based rubber-inorganic compound composite according to Claim 1, wherein said inorganic compound represented by the general formula (I) is an inorganic compound represented by the following general formula (II):
Al₂O₃ · mSiO₂ · nH₂O (II)
wherein m is an integer from 0 to 4 and n is an integer from 0 to 4.

10. The process for producing a diene-based rubber-inorganic compound composite according to Claim 2, wherein said metal constituting said metal salt, said oxo acid salt of metal and said organic metal compound is aluminium.

11. The process for producing a diene-based rubber-inorganic compound composite according to Claim 1, further comprising a step of mixing a dispersion liquid of a diene-based rubber to said liquid mixture obtained in said mixing step.

12. A diene-based rubber-inorganic compound composite which is obtained by the process according to Claim 1.

13. A process for producing a diene-based rubber-inorganic compound composite comprising a diene-based rubber and aluminium hydroxide, comprising:
a step of preparing an aluminium-containing suspension whose pH is controlled in a range between 5.1 and 8.4, and
a step of mixing said aluminium-containing suspension and a dispersion liquid of a diene-based rubber to co-coagulate said diene-based rubber and aluminium hydroxide, successively.

14. The process for producing a diene-based rubber-inorganic compound composite according to Claim 13, comprising a step of adding at least one kind selected from the group consisting an acid and a coagulation accelerator to said co-coagulated liquid mixture to complete the co-coagulation.

15. The process for producing a diene-based rubber-inorganic compound composite according to Claim 13, wherein said aluminium-containing suspension is prepared by using an aluminium salt containing an aluminate.

16. The process for producing a diene-based rubber-inorganic compound composite according to Claim 13, wherein said dispersion liquid of the diene-based rubber is a diene-based rubber latex by emulsion polymerization.

17. The process for producing a diene-based rubber-inorganic compound composite according to Claim 13, further comprising a step of separating a coagulation product by filtration and a step of drying said coagulation product.

18. The process for producing a diene-based rubber-inorganic compound composite according to Claim 13, wherein said diene-based rubber is a diene-based rubber having a polar group.

19. The process for producing a diene-based rubber-inorganic compound composite according to Claim 18, wherein said polar group is at least one kind of group selected from the group consisting of hydroxyl group, oxy group, alkoxysilyl group, epoxy group, carboxyl group, carbonyl group, oxycarbonyl group, sulfide group, disulfide group, sulfonyl group, sulfinyl group, thiocarbonyl group, imino group, amino group, nitrile group, ammonium group, imide group, amide group, hydrazo group, azo group and diazo group.

20. A diene-based rubber-inorganic compound composite which is obtained by the process according to Claim 13.
